(19) Europäisches Patentamt / European Patent Office / Office européen des brevets

(11) **EP 4 442 655 A1**

(12) **EUROPEAN PATENT APPLICATION**
published in accordance with Art. 153(4) EPC

(43) Date of publication:
**09.10.2024 Bulletin 2024/41**

(21) Application number: **22901208.3**

(22) Date of filing: **25.11.2022**

(51) International Patent Classification (IPC):
**C03B 33/09** (2006.01)   **B23K 26/364** (2014.01)
**B23K 26/38** (2014.01)   **B23K 26/53** (2014.01)
**C03B 33/07** (2006.01)   **C03B 33/08** (2006.01)

(52) Cooperative Patent Classification (CPC):
**B23K 26/364; B23K 26/38; B23K 26/53;
C03B 33/07; C03B 33/08; C03B 33/09**

(86) International application number:
**PCT/JP2022/043631**

(87) International publication number:
**WO 2023/100775 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2021 JP 2021193951**

(71) Applicant: **AGC INC.**
**Chiyoda-ku,**
**Tokyo 1008405 (JP)**

(72) Inventors:
• **SAITO Isao**
  **Tokyo 100-8405 (JP)**
• **FUJIWARA Takuma**
  **Tokyo 100-8405 (JP)**
• **SHIBATA Akihiro**
  **Tokyo 100-8405 (JP)**
• **ONO Takeaki**
  **Tokyo 100-8405 (JP)**
• **IIDA Ryoichi**
  **Tokyo 100-8405 (JP)**

(74) Representative: **Müller-Boré & Partner**
**Patentanwälte PartG mbB**
**Friedenheimer Brücke 21**
**80639 München (DE)**

(54) **METHOD FOR MANUFACTURING GLASS SUBSTRATE, AND GLASS SUBSTRATE**

(57)   The present invention provides a method for manufacturing a glass substrate, by which a glass substrate in a desired shape is obtained from a glass plate (1), said method comprising: irradiating the glass plate (1) with a first laser beam (L 1) to form a scribe line (4) defining an outline (4a) of the glass substrate in the desired shape across the entire thickness of the glass plate (1); and removing an unnecessary area (7) of the glass plate (1) along the scribe line (4) by fusion cutting a position away from the scribe line (4) on the opposite side from the desired shape bounded by the scribe line (4), thereby obtaining the glass substrate of the desired shape along the outline (4a).

## FIG. 1A

EP 4 442 655 A1

**(Cont. next page)**

## FIG. 1B

## FIG. 1C

## FIG. 1D

**Description**

TECHNICAL FIELD

The present invention relates to a method for producing a glass substrate, and a glass substrate.

BACKGROUND ART

In the related art, as for a method for producing a glass substrate, a technique of obtaining a desired shape by dividing a glass plate has been known. For example, the invention described in Patent Literature 1 discloses a glass plate processing method in which a crack is formed in a glass plate by irradiation with a laser beam, and a stress is applied to the glass plate to process the glass plate into a desired shape.

CITATION LIST

PATENT LITERATURE

Patent Literature 1: WO 2021/100477
Patent Literature 2: JP2020-500137A
Patent Literature 3: JP2012-526721A

SUMMARY OF INVENTION

TECHNICAL PROBLEM

The invention described in Patent Literature 2 discloses a glass substrate processing method in which removal is performed by ablation with a laser. The invention described in Patent Literature 3 discloses a processing method including a step of heating a fragile material by a laser along a dividing path so as to divide the fragile material into a first portion and a second portion.

However, the invention described in Patent Literature 2 is intended to perform removal by the ablation with a laser, and it is necessary to radiate the laser many times. In Patent Literature 2, an additional step of, for example, attaching and removing an adhesive tape to and from an unnecessary portion is required in order to remove the unnecessary portion. Patent Literature 2 discloses a processing method for forming a through hole in a glass plate, but there is a problem that the glass plate cannot be divided along a contour of the through hole, and a high-quality through hole cannot be formed with a desired cross-sectional shape in the glass plate.

The invention described in Patent Literature 3 discloses that the glass plate is spontaneously divided by, for example, performing marking-off on a surface of the glass plate, and a cross-sectional shape after the division is left to chance. Therefore, according to the processing method of Patent Literature 3, there is a problem that the glass plate cannot be divided with a desired cross-sectional shape and a high quality.

The present invention has been made in view of the above problems, and an object thereof is to provide a method for producing a glass substrate, by which a high-quality division is enabled with a desired cross-sectional shape.

Another object of the present invention is to provide a glass substrate that has a high-quality through hole with a desired cross-sectional shape and is excellent in visibility of the through hole.

SOLUTION TO PROBLEM

In order to solve the above-described problems, according to an aspect of the present invention, there is provided a method for producing a glass substrate that has a desired shape and is obtained from a glass plate. The method includes emitting a first laser beam to the glass plate to form a scribe line over an entire thickness of the glass plate, the scribe line defining a contour line of the glass substrate having the desired shape; and performing a fusion-cutting at a position away from the scribe line on a side opposite to the desired shape and removing an unnecessary region of the glass plate along the scribe line to obtain the glass substrate having the desired shape along the contour line.

According to an aspect of the present invention, there is provided a method for producing a glass substrate that has a desired shape and is obtained from a glass plate. The method includes emitting a first laser beam to the glass plate to form a scribe line over an entire thickness of the glass plate, the scribe line defining a contour line of the glass substrate having the desired shape; performing a fusion-cutting at a position away from the scribe line on a side opposite to the desired shape; and further emitting a fourth laser beam to at least a part of the contour line formed by the scribe line, and removing an unnecessary region of the glass plate along the scribe line to obtain the glass substrate having the desired shape along the contour line.

According to an aspect of the present invention, there is provided a glass substrate having a through hole. An inner peripheral surface of the through hole includes inclined surfaces inclined in a thickness direction of the glass plate toward an inner side of the through hole from two main surfaces of the glass substrate facing each other and an inner wall surface connecting the inclined surfaces inside the through hole in the thickness direction of the glass substrate. A surface roughness of the inclined surfaces is smaller than a surface roughness of the inner wall surface.

According to an aspect of the present invention, there is provided a glass substrate including a through hole, in which an inner peripheral surface of the through hole connects main surfaces facing each other, the inner peripheral surface includes: an inner wall surface; and chamfered surfaces located between the inner wall surface and each of the main surfaces, and each of the chamfered surface is formed as a concave surface.

## ADVANTAGEOUS EFFECTS OF INVENTION

According to an aspect of the present invention, there is provided a method for producing a glass substrate, by which a glass plate can be divided into a desired shape with a desired cross-sectional shape and a high quality.

According to an aspect of the present invention, there is provided a glass substrate that has a high-quality through hole with a desired cross-sectional shape and is excellent in visibility of the through hole.

## BRIEF DESCRIPTION OF DRAWINGS

[FIGS. 1A to 1D] FIGS. 1A to 1D are cross-sectional views illustrating a method for producing a glass substrate according to a first embodiment.

[FIG. 2] FIG. 2 is a schematic diagram illustrating a mechanism of dividing a glass plate according to the present embodiment.

[FIGS. 3A to 3C] FIGS. 3A to 3C are schematic diagrams illustrating a process of forming a scribe line according to the present embodiment.

[FIGS. 4A to 4D] FIGS. 4A to 4D are cross-sectional views illustrating a method for producing a glass substrate according to a second embodiment.

[FIGS. 5A to 5D] FIGS. 5A to 5D are cross-sectional views illustrating a method for producing a glass substrate according to a third embodiment.

[FIGS. 6A to 6D] FIGS. 6A to 6D are cross-sectional views illustrating a method for producing a glass substrate according to a fourth embodiment.

[FIGS. 7A to 7D] FIGS. 7A to 7D are cross-sectional views illustrating a method for producing a glass substrate according to a fifth embodiment.

[FIGS. 8A to 8E] FIGS. 8A to 8E are cross-sectional views illustrating a method for producing a glass substrate according to a sixth embodiment.

[FIGS. 9A and 9B] FIGS. 9A and 9B are cross-sectional views illustrating a method for producing a glass substrate using a curved glass.

[FIGS. 10A and 10B] FIG. 10A is a plan view of the glass substrate according to the present embodiment, and FIG. 10B is a cross-sectional view thereof.

[FIG. 11] FIG. 11 is a cross-sectional view of a glass substrate according to another embodiment different from that of FIGS. 10A and 10B.

[FIG. 12] FIG. 12 is a cross-sectional view of a glass substrate according to another embodiment different from that of FIGS. 10A to 11.

[FIG. 13] FIG. 13 is a cross-sectional view of a glass substrate according to another embodiment different from that of FIGS. 10A to 12.

[FIGS. 14A and 14B] FIG. 14A is a schematic diagram of an experimental example in which a shift amount between a scribe line and a fusion-cut portion is changed. FIG. 14B shows photographs of end surfaces of the glass substrate in Examples in which the shift amount is changed.

[FIGS. 15A to 15F] FIGS. 15A to 15F are cross-sectional views illustrating a method for producing a glass substrate according to a seventh embodiment.

[FIGS. 16A to 16C] FIGS. 16A to 16C are plan views illustrating steps of obtaining a plurality of glass substrates having a desired shape from one large glass plate.

[FIG. 17] FIG. 17 shows a photograph of an end surface of a glass substrate produced in Experiment 2.

DESCRIPTION OF EMBODIMENTS

Hereinafter, embodiments of the present invention will be described with reference to the drawings. In the drawings, the same or corresponding reference numerals are given to the same or corresponding configurations, and descriptions thereof are omitted.

The definition of the term is appropriately described in the specification. Terms that are not specifically described are interpreted in widely and generally known meanings thereof.

[Background leading up to method for producing glass substrate of present embodiment]

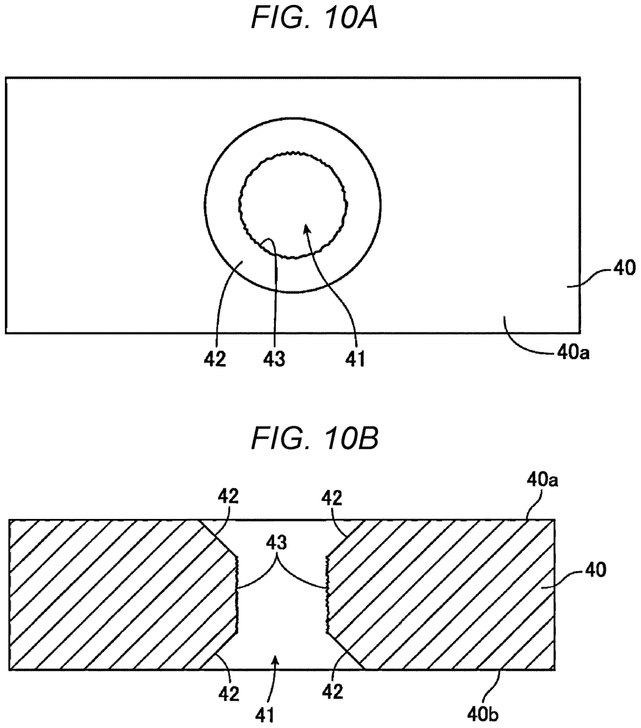

As a glass substrate production method for obtaining a desired shape by dividing a glass plate, a method of dividing a glass plate by a laser has been known. For example, Patent Literatures 2 and 3 can be cited. However, in Patent Literature 2, it is necessary to irradiate the glass plate with the laser a plurality of times to divide the glass plate by ablation, and further, it is necessary to add a step such as vacuum adsorption to remove unnecessary portions. FIG. 10 according to Patent Literature 2 illustrates an example in which a through hole is formed, and the glass plate is not divided along a contour of the through hole as can be seen from the photograph in FIG. 10.

In Patent Literature 3, as described in paragraph 0019 or the like, the glass plate is spontaneously divided in the step of heating the glass plate. That is, it is unclear whether the glass plate is divided along a division path illustrated in Patent Literature 3.

Therefore, in the method for producing a glass substrate according to the related art, there is a problem that the glass plate cannot be divided with a desired cross-sectional shape and a high quality. In particular, it is not possible to divide a glass plate into a complicated shape such as an in-curve shape, or a through hole shape with a desired cross-sectional shape and a high quality.

Therefore, as a result of intensive studies, the present inventors have completed the invention of a method for producing a glass substrate, from which an unnecessary region can be removed, by forming, over an entire thickness of the glass plate, a scribe line that defines a contour line corresponding to a glass substrate having a desired shape, and performing a fusion-cutting at a position away from the scribe line.

[Method for producing glass substrate according to first embodiment]

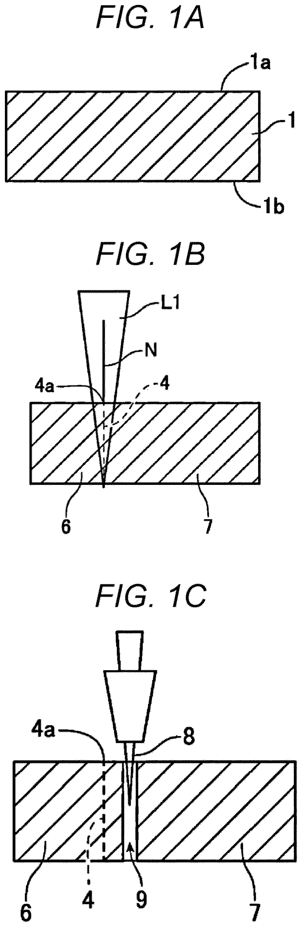

A method for producing a glass substrate according to a first embodiment will be described with reference to FIGS. 1A to 1D.

In the step illustrated in FIG. 1A, a glass plate 1 is prepared. A shape of the glass plate 1 is not particularly limited, and not only a flat glass but also a curved glass or the like may be used. A material of the glass plate 1 is not limited, and an alkali-free glass and an alkali glass can be used without distinction. The glass plate 1 is, for example, a soda-lime glass, an alkali-free glass, or a glass for chemical strengthening. The glass for chemical strengthening is used as, for example, a cover glass of a display after being chemically strengthened. The glass plate 1 may be a glass for air-tempering.

A thickness of the glass plate 1 is not particularly limited, and is generally preferably 5 mm or less, more preferably 3 mm or less in order to effectively perform the chemical strengthening treatment. In the case where the glass plate 1 is used as a cover glass of an in-vehicle display device for car navigation or the like, the thickness of the glass plate 1 is preferably 0.2 mm or more, more preferably 0.8 mm or more, and still more preferably 1 mm or more from the viewpoint of strength.

In the case where the glass substrate 1 is used as a transparent substrate, dimensions can be appropriately selected depending on the application. For example, in the case of being used as a cover glass for an in-vehicle display device, a length of a short side is, for example, 50 mm or more and 500 mm or less, and preferably 100 mm or more and 300 mm or less, and a length of a long side is, for example, 50 mm or more and 1500 mm or less, and preferably 100 mm or more and 1200 mm or less.

As illustrated in FIG. 1A, the glass plate 1 has two main surfaces facing each other, which include a first main surface 1a on a front surface side and a second main surface 1b on a back surface side. The first main surface 1a and the second main surface 1b face each other in a thickness direction of the glass plate 1. The "main surface" refers to a surface having the largest area.

Each of the main surfaces 1a and 1b has, for example, a rectangular shape in plan view. The main surfaces 1a and 1b may have a trapezoidal shape, a circular shape, an elliptical shape, or the like in plan view, and are not particularly limited.

Next, as illustrated in FIG. 1B, a laser beam (first laser beam) L1 is emitted to the glass plate 1 to continuously form a scribe line 4 over the entire thickness of the glass plate 1. Here, the "scribe line" refers to a dot-shaped or linear modified portion or a crack formed continuously over the entire thickness of the glass plate 1 by emitting the laser beam L1 to the glass plate 1. For example, in a cross section illustrated in FIG. 1B, the modified portion appears as a dotted line. In the modified portion, the density or refractive index of the glass is changed. The glass plate 1 is not divided only by forming the scribe line 4. In FIG. 1B, the scribe line 4 is indicated by a dotted line. The same applies to other drawings.

When the scribe line 4 is formed to have a length capable of exhibiting the effect of the present embodiment in the thickness direction of the glass plate 1, this is defined as a state in which the scribe line 4 is formed over the entire thickness of the glass plate 1. Specifically, when the scribe line 4 has a length of 90% or more, preferably 95% or more, and more preferably 98% or more of the thickness of the glass substrate 1, the scribe line 4 can be regarded as being formed over the entire thickness of the glass plate 1.

In this way, in the present embodiment, the scribe line 4 is formed over the entire thickness from the first main surface 1a to the second main surface 1b of the glass plate 1. The scribe line 4 forms a contour line 4a of a glass substrate having a desired shape. The "contour line" is a shape line that appears on each of the main surfaces 1a and 1b forming a desired shape. Therefore, the scribe line 4 that appears on the cross section illustrated in FIG. 1B forms a part of the contour line 4a and is a line for defining the contour line 4a. The glass plate 1 is divided into a plurality of regions by the scribe line 4, and a desired region 6 forming a desired shape and an unnecessary region 7 are obtained. The desired region 6 may be either inside or outside the contour line 4a, and further, the contour line 4a may be a closed line or a non-closed line.

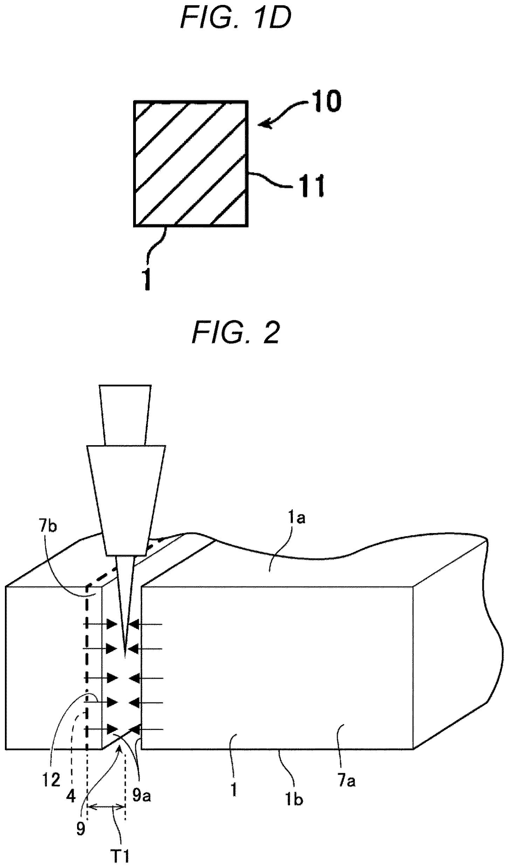

In FIG. 1B, the scribe line 4 is formed in a direction parallel to the thickness direction from the first main surface 1a to the second main surface 1b and a direction perpendicular to the first main surface 1a and the second main surface 1b. However, the scribe line 4 may be formed to have an angle of less than 90° in the thickness direction with respect to each of the main surfaces 1a and 1b of the glass plate 1 in a cross section along the thickness direction of the glass plate 1. Here, the term "angle" refers to an angle formed between a normal line N of the first main surface 1a and the scribe line 4. In FIG. 1, the scribe line 4 is parallel to the normal line N, and therefore, the formed angle is 0°. The formed angle is not limited, and is, for example, 0° to 45°, preferably more than 0° to 45°, more preferably 1° to 45°, and still more preferably 3° to 45°.

The type of the laser beam L1 is not limited, and for example, a pulsed laser beam having a wavelength range of 250 nm to 3000 nm and a pulse width of 10 fs to 1000 ns is preferably used. The laser beam having a wavelength range of 250 nm to 3000 nm is transmitted through the glass plate 1 to some extent, and therefore, nonlinear absorption can be caused inside the glass plate 1, and the scribe line 4 extending from the first main surface 1a to the second main surface 1b can be formed inside the glass plate 1. The wavelength range is preferably 260 nm to 2500 nm. In addition, when the pulsed laser beam has a pulse width of 1000 ns or less, the photon density can be easily increased, and nonlinear absorption can be generated inside the glass plate 1. The pulse width is preferably 100 fs to 100 ns. The laser beam L1 may output a pulse group called a burst. One pulse group includes, for example, a plurality of beams of pulsed light with the number of 3 to 50, and each pulsed light has a pulse width of less than 10 ns. In one pulse group, the energy of the pulsed light may gradually decrease. The energy of one pulse or one pulse group is appropriately set so as to form a dot-shaped or linear modified portion or a crack continuously formed in the thickness direction of the glass plate 1. The energy of the laser beam L1 is, for example, 10 $\mu$J to 5000 $\mu$J, preferably 20 $\mu$J to 3000 $\mu$J, and more preferably 30 $\mu$J to 2000 $\mu$J.

The laser beam L1 preferably has a linear power distribution in an optical axis direction. As the laser beam L1, a laser having a power distribution with at least one peak in the optical axis direction may be used. Accordingly, the scribe line 4 can be accurately formed in the thickness direction from the first main surface 1a to the second main surface 1b.

Next, as illustrated in FIG. 1C, a fusion-cutting is performed at a predetermined position of the unnecessary region 7, which is away from the scribe line 4 and the contour line 4a formed by the scribe line 4, and removal is performed. In this way, the fusion-cutting position is defined as a portion away in a direction of the unnecessary region 7 from the scribe line 4 and the contour line 4a formed by the scribe line 4, which appear in the cross section illustrated in FIG. 1C. In other words, the fusion-cutting position is a position away from the scribe line 4 and the contour line 4a formed by the scribe line 4 by a predetermined distance on a side opposite to the desired shape of the glass substrate, that is, the desired region 6.

In the present embodiment, the fusion-cutting method is not limited, and for example, a laser fusion-cutting or a gas fusion-cutting is used. In FIG. 1C, the fusion-cutting is performed with a laser beam (third laser beam) 8. The laser beam used for the fusion-cutting is not particularly limited, and for example, a laser beam having an infrared ray wavelength having a wavelength range of 0.78 $\mu$m to 100 $\mu$m is preferred. Examples thereof include a semi-conductor laser, a fiber laser, a CO laser, and a $CO_2$ laser. As illustrated in FIG. 1C, a fusion-cut portion 9 is formed in the glass plate 1 at a position where the fusion-cutting is performed. The fusion-cut portion 9 is a space formed by the fusion-cutting. The output of the laser beam 8, a theoretical condensing diameter, and a scanning speed are appropriately set so that the glass plate 1 can be fusion-cut. The output of the laser beam 8 is, for example, 10 W to 5000 W, preferably 20 W to 3000 W, and more preferably 50 W to 2000 W. The theoretical condensing diameter may be 10 $\mu$m to 3000 $\mu$m, preferably 30 $\mu$m to 2000 $\mu$m, and more preferably 50 $\mu$m to 1000 $\mu$m. The scanning speed may be 0.1 mm/s to 500 mm/s, preferably 0.5 mm/s to 300 mm/s, and more preferably 1 mm/s to 200 mm/s.

In the present embodiment, the scribe line 4 is formed over the entire thickness of the glass plate 1, and a fusion-cutting is performed at a position away from the scribe line 4 and the contour line 4a formed by the scribe line 4 on the side opposite to the desired shape, so that the glass plate 1 can be divided along the scribe line 4 as illustrated in FIG. 1D. Accordingly, the unnecessary region 7 can be removed, and a glass substrate 10 having a desired shape illustrated in FIG. 1D can be obtained. An outer peripheral surface 11 of the glass substrate 10 illustrated in FIG. 1D is at least partially or preferably entirely a surface formed by removing the unnecessary region 7 from the same position where the scribe line 4 is formed.

As described above, in the method for producing a glass substrate of the present embodiment, when the glass plate 1 is to be divided, the scribe line 4 is formed over the entire thickness of the glass plate 1, and the unnecessary region 7 is fusion-cut along the scribe line 4 and the contour line 4a formed by the scribe line 4. Accordingly, the glass plate 1 can be divided with a desired cross-sectional shape and a high quality along the scribe line 4.

[Mechanism of dividing glass plate 1]

A mechanism of dividing the glass plate 1 will be described with reference to FIG. 2. FIG. 2 is a diagram illustrating a mechanism of dividing the glass plate 1 of the present embodiment along the scribe line 4. As illustrated in FIG. 2, the scribe line 4 is formed from the first main surface 1a to the second main surface 1b of the glass plate 1 in a manner of continuously extending over the entire thickness. Then, a fusion-cutting is performed at a position away from the scribe line 4 on the side opposite to the desired shape of the glass substrate, and the fusion-cut portion 9 is formed. Accordingly, the glass in the unnecessary region 7 is removed along the scribe line 4 and the fusion-cut portion 9.

Along with the removal of the unnecessary region 7 along the fusion-cut portion 9, the molten glass re-solidifies at an inner end surface 9a of the fusion-cut portion 9. At this time, a tensile stress 12 indicated by arrows illustrated in FIG. 2 is generated toward the fusion-cut portion 9 over the entire thickness of the glass plate 1.

Not only a first unnecessary region 7a on a side away from the scribe line 4 via the fusion-cut portion 9 but also a second unnecessary region 7b located between the scribe line 4 and the fusion-cut portion 9 can be removed by the tensile stress 12 and the crack of the scribe line 4. Therefore, in the present embodiment, the glass plate 1 can be divided along the scribe line 4 formed over the entire thickness of the glass plate 1.

The smaller a shift amount T1 between the scribe line 4 and the fusion-cut portion 9 illustrated in FIG. 2 is, the stronger the tensile stress 12 is. In this case, in order to perform division along the scribe line 4 with a desired cross-sectional shape and a high quality, it is preferable to perform a fusion-cutting under a condition that the temperature at the scribe line 4 is equal to or lower than an annealing point. Accordingly, it is possible to prevent adhesion of a molten material to the divided surface or occurrence of a decrease in strength due to a residual stress, and it is possible to perform a high-quality cutting with a desired cross-sectional shape. The shift amount T1 is defined by a distance from a position of the scribe line 4 to a central position of the fusion-cut portion 9.

The tensile stress 12 tends to decrease as the shift amount T1 between the scribe line 4 and the fusion-cut portion 9 increases, and therefore, it is preferable to increase the volume of the molten glass in order to generate the stress required for the division. As described above, the tensile stress 12 is generated when the molten glass is re-solidified, and therefore, the fusion conditions are adjusted so as to increase the amount of the molten glass. Accordingly, the molten glass in which a stress equal to or greater than a breaking stress by which the glass plate can be divided along the scribe line 4, that is, the unnecessary region 7 can be removed is generated can be formed in the fusion-cut portion 9, and a high-quality cutting can be performed with a desired cross-sectional shape along the scribe line 4. The fusion-cut portion 9 is preferably formed in parallel along a direction of the scribe line 4, and the fusion-cut portion 9 may not be formed in parallel along the direction of the scribe line 4 as long as the molten glass in which a stress greater than the breaking stress is generated can be formed in the fusion-cut portion 9.

Although not limited, in the present embodiment, the shift amount T1 between the scribe line 4 and the fusion-cut portion 9 is preferably 0.6 mm or more and 2.0 mm or less. The high-quality cutting can be performed with a desired cross-sectional shape, for example, in such a manner that the molten material does not remain on a divided surface formed along the scribe line 4 and chipping does not occur on the divided surface.

[Method for forming scribe line 4]

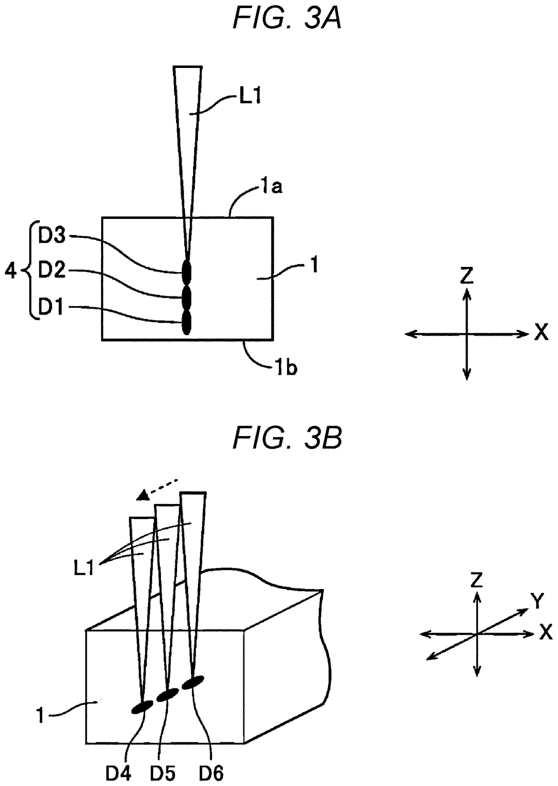

A method for forming the scribe line 4 with the laser beam L1 will be described with reference to FIGS. 3A to 3C. An X direction illustrated in FIGS. 3A to 3C is one direction forming a planar direction of the glass plate 1, and a Y direction is one direction forming the planar direction and perpendicular to the X direction. In this way, the X direction and the Y direction are directions perpendicular to each other. As illustrated in FIGS. 3A to 3C, for example, the X direction is a lateral direction of the glass plate 1 in the drawing, and the Y direction is a depth direction of the glass plate 1. The Z direction is a thickness direction of the glass plate 1 perpendicular to each of the X direction and the Y direction.

FIG. 3A is a diagram in which the laser beam L1 is emitted a plurality of times while an irradiation focal point of the laser beam L1 is shifted in a direction parallel to the Z direction. Accordingly, dot-shaped modified portions D1 to D3 can be formed in the thickness direction of the glass plate 1. In FIG. 3A, only three modified portions D 1 to D3 are illustrated, and by forming these modified portions over the entire thickness of the glass plate 1, it is possible to obtain the scribe line 4 extending from the first main surface 1a to the second main surface 1b.

The laser beam L1 is shifted not only in the Z direction but also in the planar direction to form the scribe line 4 along the planar direction. For example, as illustrated in FIG. 3B, modified portions D4 to D6 are formed toward the Y direction by shifting the irradiation focal point of the laser beam L1 in the Y direction. In this way, the scribe line 4 forming a contour line of the glass substrate having a desired shape can be formed by shifting the irradiation focal point of the laser beam L 1 in the Z direction and also shifting the irradiation focal point in the planar direction and emitting. At this time, the scribe line 4 forming a contour line of an in-curve shape can also be formed by shifting in an in-curve shape instead of shifting in parallel to the Y direction. The present embodiment is applied to any shape such as a complicated shape or a through hole shape other than the in-curve shape.

As an example, the laser beam L 1 can be emitted based on the following parameters to form the scribe line 4.

$$\text{Irradiation pitch (x)} = \text{speed (v)/pulse frequency (f)} \quad \text{Formula (1)}$$

$$\text{Pulse energy (E)} = \text{output (P)/pulse frequency (f)} \quad \text{Formula (2)}$$

The laser beam L 1 is emitted to the glass plate 1 using the process parameters based on Formulas (1) and (2).

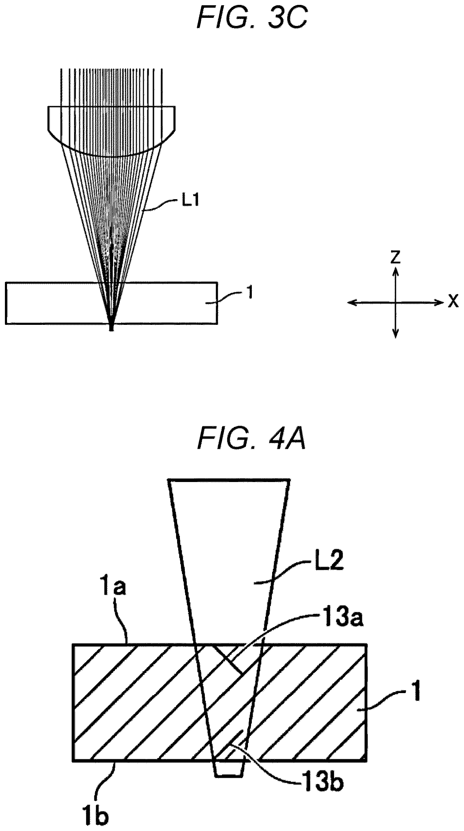

As illustrated in FIG. 3C, the glass plate 1 can be irradiated once to form the scribe line 4 over the entire thickness direction of the glass plate 1 by adjusting the irradiation conditions of the laser beam L1.

The scribe line 4 formed as illustrated in FIGS. 3A to 3C can be present in a state in which a plurality of modified portions extending linearly or in a dotted line shape in the thickness direction are formed in the planar direction. The modified portions are separated from each other in the planar direction, and an interval between the modified portions in the planar direction (hereinafter, referred to as an irradiation pitch or the like) is, for example, 2 $\mu$m to 25 $\mu$m, and preferably 3 $\mu$m to 20 $\mu$m. Within this range, it is easy to increase the quality of the divided surface after division in a subsequent step.

Further, the irradiation pitch may be changed in at least a part of a contour line to be described below, and the irradiation pitch may be smaller in a partial region of the contour line than in other regions.

For example, in the case where the contour line has a curved portion, the irradiation pitch in the curved portion may be smaller than that of in a linear portion. In this way, the division in the curved portion can be promoted, and the quality of the divided surface can be improved.

For example, a region in which the irradiation pitch is 70% or less of the other region may be provided in a section corresponding to a length of 25% or less of a peripheral length (entire length) of the contour line. In this way, a starting point of beginning of division can be created along the contour line, and the quality of the divided surface can be improved.

The length of the contour line means a length along the main surfaces 1a and 1b unless otherwise specified. Therefore, "at least a part of the contour line" is a part of the length along the main surfaces 1a and 1b, and the curved portion and the linear portion are present along this length direction. The "peripheral length of the contour line" refers to the entire length along the main surfaces 1a and 1b.

[Effects of method for producing glass substrate of present embodiment]

In the method for producing a glass substrate of the present embodiment, when the glass plate 1 is divided, the scribe line 4 is formed over the entire thickness of the glass plate 1, and a fusion-cutting is performed at a position away from the scribe line 4 and the contour line 4a formed by the scribe line 4 on the side opposite to a desired shape of the glass substrate, that is, the desired region 6. Accordingly, the glass plate 1 can be divided with a desired cross-sectional shape and a high quality along the scribe line 4. In the present embodiment, the divided surface may be a surface parallel to the thickness direction or may be inclined, and a contour line of a glass substrate having a desired shape can be obtained with a desired cross-sectional shape and a high quality even in a complicated shape such as an in-curve shape, a through hole shape, or the like.

In the present embodiment, a divided surface in which adhesion of the molten material or occurrence of the chipping is prevented can be obtained. Regarding the divided surface, as illustrated in FIG. 1D, the outer peripheral surface 11 constituting the divided surface may be a vertical surface, or may form a chamfered surface as described below.

In addition, in the method for producing a glass substrate according to the present embodiment, a high degree of freedom is provided for the thickness, size, and shape of the glass plate 1, and a high-quality divided surface having a desired cross-sectional shape can be formed. Post-treatment after division is not required, or the load associated with the post-treatment can be reduced.

The effects described above are similarly exhibited in other embodiments described below.

[Method for producing glass substrate according to second embodiment]

A method for producing a glass substrate according to a second embodiment will be described with reference to FIGS. 4A to 4D.

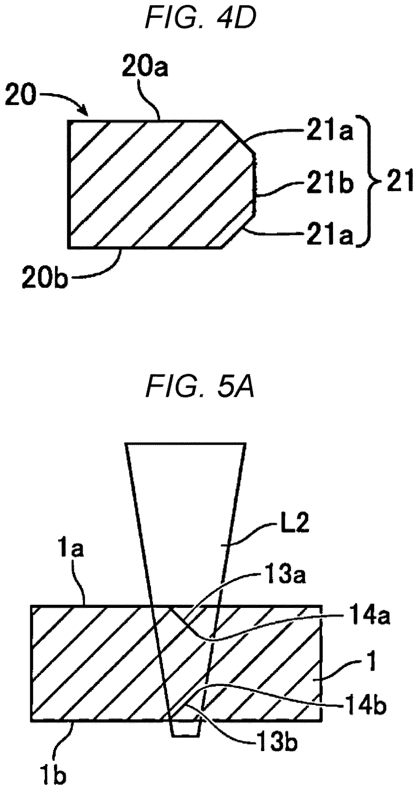

As illustrated in FIG. 4A, a laser beam (first laser beam) L2 is emitted to the first main surface 1a and the second main surface 1b of the glass plate 1 to form first scribe lines 13a and 13b extending obliquely with respect to the thickness direction. The first scribe lines 13a and 13b can be formed by moving the irradiation focal point of the laser beam L2. Accordingly, it is possible to form the first scribe line 13a obliquely extending from the first main surface 1a of the glass plate 1 toward the thickness direction and the first scribe line 13b obliquely extending from the second main surface 1b of the glass plate 1 toward the thickness direction. The first scribe lines 13a and 13b are inclined toward an outer side of the desired shape of the glass substrate. The first scribe lines 13a and 13b are lines for defining a part of a contour line of the glass substrate having a desired shape, and constitute inclined surfaces 21a of a glass substrate 20 illustrated in FIG. 4D, which is to be finally obtained. The inclined surfaces 21a are inclined outward from the respective main surfaces 20a and 20b toward an end surface 21b. Therefore, the first scribe lines 13a and 13b are defined to be inclined toward the outer side of the desired shape of the glass substrate.

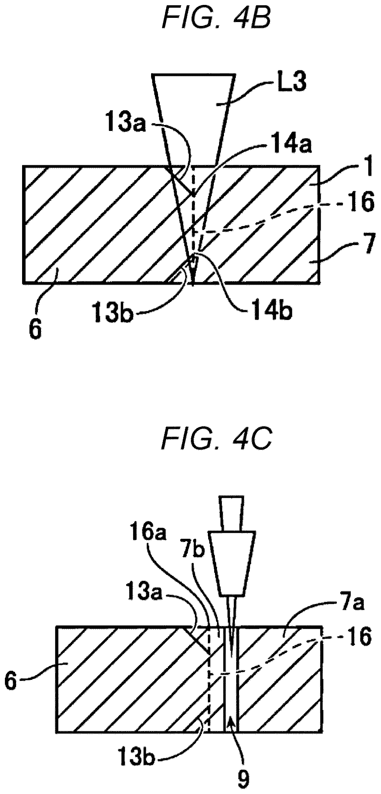

Subsequently, as illustrated in FIG. 4B, a laser beam (a first laser beam) L3 is emitted to the glass plate 1 to form a second scribe line 16 that intersects with outer end portions 14a and 14b of the first scribe lines 13a and 13b. As illustrated in FIG. 4B, the second scribe line 16 is formed over the entire thickness of the glass plate 1. Accordingly, it is possible to form the second scribe line 16 that connects the outer end portions 14a and 14b of the first scribe lines 13a and 13b in the thickness direction. Accordingly, it is possible to form a contour line with a desired shape from the first scribe lines 13a and 13b to the second scribe line 16, and to divide the glass plate 1 into a plurality of regions including the desired region 6 and the unnecessary region 7.

The laser beam L2 causes mainly linear absorption by irradiating the glass plate 1. The expression "causing mainly linear absorption" means that the amount of heat generated by linear absorption is greater than the amount of heat generated by nonlinear absorption.

The laser beam L3 is pulsed light and forms a modified portion by nonlinear absorption. The types of the laser beam L2 and the laser beam L3 are not limited, and the laser beam L2 is, for example, continuous wave light. A light source of the laser beam L2 is, for example, a Yb fiber laser. The Yb fiber laser is obtained by doping an optical fiber core with Yb, and outputs a continuous wave light having a wavelength of 1070 nm.

The laser beam L3 is pulsed light, and for example, a pulsed laser beam having a wavelength range of 250 nm to 3000 nm and a pulse width of 10 fs to 1000 ns is preferably used. The laser beam having a wavelength range of 250 nm to 3000 nm is transmitted through the glass plate 1 to some extent, and therefore, nonlinear absorption can be caused inside the glass plate 1, and the second scribe line 16 extending from the first main surface 1a to the second main surface 1b can be formed inside the glass plate 1. The wavelength range is preferably 260 nm to 2500 nm. In addition, when the pulsed laser beam has a pulse width of 1000 ns or less, the photon density can be easily increased, and nonlinear absorption can be generated inside the glass plate 1. The pulse width is preferably 100 fs to 100 ns. The laser beam L3 may output a pulse group called a burst. One pulse group includes, for example, a plurality of beams of pulsed light with the number of 3 to 50, and each pulsed light has a pulse width of less than 10 ns. In one pulse group, the energy of the pulsed light may gradually decrease.

The laser beam L3 preferably has a linear power distribution in an optical axis direction. As the laser beam L3, a laser having a power distribution with at least one peak in the optical axis direction may be used. Accordingly, the scribe line 16 can be accurately formed in the thickness direction from the first main surface 1a to the second main surface 1b.

As illustrated in FIG. 4C, a fusion-cutting is performed at a predetermined position away from the second scribe line 16 on an unnecessary region 7 side. As illustrated in FIG. 4D, the fusion-cut portion 9 is formed at a position where the fusion-cutting is performed.

A tensile stress is generated due to the fusion-cutting, so that not only the first unnecessary region 7a on the side away from the second scribe line 16 illustrated in FIG. 4D via the fusion-cut portion 9 but also the second unnecessary region 7b located between the second scribe line 16 and the first scribe lines 13a and 13b and the fusion-cut portion 9 are removed. Accordingly, the glass plate 1 can be divided with a desired cross-sectional shape and a high quality along the first scribe lines 13a and 13b and the second scribe line 16, and the glass substrate 20 formed by the desired region 6 can be obtained.

As illustrated in FIG. 4D, an outer peripheral surface 21 of the glass substrate 20 obtained by the production method of the second embodiment is formed by the end surface 21b and the inclined surfaces 21a connecting the end surface 21b with the main surfaces 20a and 20b. The end surface 21b is a vertical surface extending out in parallel with the thickness direction with respect to the main surfaces 20a and 20b. The surface roughness of the inclined surface 21a is smaller than the surface roughness of the end surface 21b.

[Method for producing glass substrate according to third embodiment]

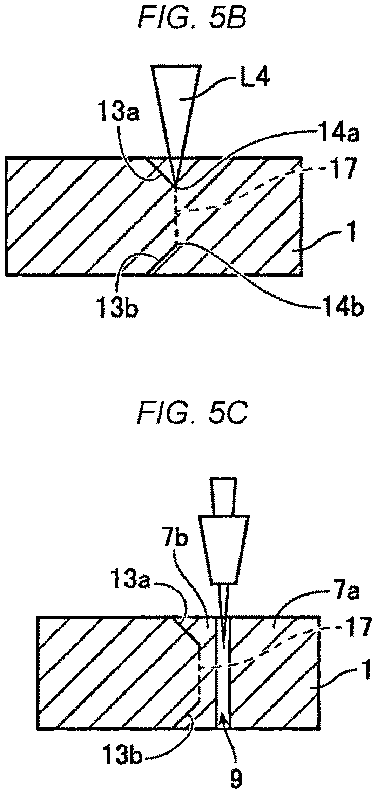

A method for producing a glass substrate according to a third embodiment will be described with reference to FIGS. 5A to 5D. The third embodiment is different from the second embodiment only in the step illustrated in FIG. 5B corresponding to FIG. 4B.

That is, as illustrated in FIG. 5A, the laser beam (first laser beam) L2 is emitted to the first main surface 1a and the second main surface 1b of the glass plate 1 to form the first scribe lines 13a and 13b extending obliquely from the thickness direction.

Next, in FIG. 5B, a laser beam (first laser beam) L4 is emitted to form a second scribe line 17 that connects outer end portions 14a and 14b of the first scribe lines 13a and 13b in the thickness direction. In FIG. 5B, unlike FIG. 4B, the second scribe line 17 is not formed over the entire thickness of the glass plate 1, and is formed only between the end portions 14a and 14b of the first scribe lines 13a and 13b.

In FIG. 5B, the light wavelength, the pulse width, and the like are adjusted such that multiphoton absorption occurs only near a focal point. Although not limited, the light source of the laser beam L4 illustrated in FIG. 5B includes, for example, a Nd-doped YAG crystal (Nd: YAG), and outputs a pulsed light having a wavelength of 1064 nm. Note that the wavelength of the pulsed light is not limited to 1064 nm. A Nd:YAG second harmonic laser (wavelength: 532 nm), a Nd:YAG third harmonic laser (wavelength: 355 nm), or the like can also be used.

As illustrated in FIG. 5B, the first scribe lines 13a and 13b and the second scribe line 17 are lines for defining a contour line of a glass substrate having a desired shape. Then, as illustrated in FIG. 5C, a fusion-cutting is performed at a predetermined position away from the second scribe line 17 and the contour line formed by the second scribe line 17 on the unnecessary region 7 side. As illustrated in FIG. 5C, the fusion-cut portion 9 is formed at the position where the fusion-cutting is performed.

A tensile stress is generated due to the fusion-cutting, so that not only the first unnecessary region 7a on the side away from the second scribe line 17 illustrated in FIG. 5C via the fusion-cut portion 9 but also the second unnecessary region 7b located between the second scribe line 17 and the first scribe lines 13a and 13b and the fusion-cut portion 9 are removed.

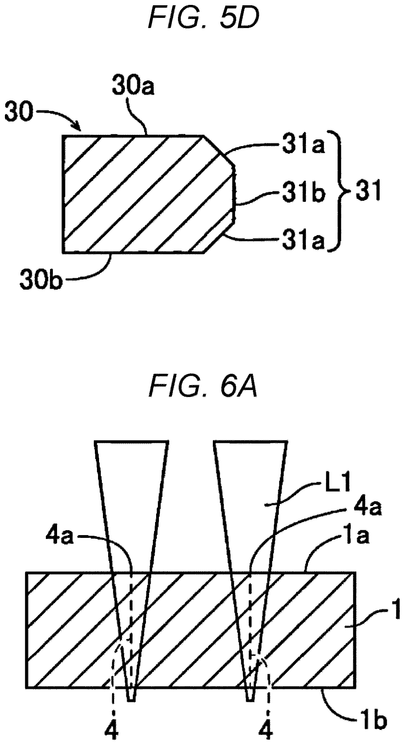

As illustrated in FIG. 5D, an outer peripheral surface 31 of the glass substrate 30 obtained by the production method of the third embodiment is formed by an end surface 31b and inclined surfaces 31a connecting the end surface 31b with the main surfaces 30a and 30b. The end surface 31b is a vertical surface extending out in parallel with the thickness direction with respect to the main surfaces 30a and 30b. The surface roughness of the inclined surface 31a is smaller than the surface roughness of the end surface 31b.

[Method for producing glass substrate according to fourth embodiment]

In the method for producing the glass substrates of the first embodiment to the third embodiment, the outer peripheral surface of the glass substrate is divided. The present invention is not limited thereto, and can also be applied to, for example, the formation of through holes as described below.

The method for producing the glass substrate of the fourth embodiment illustrated in FIGS. 6A to 6D conforms to the method for producing the glass substrate of the first embodiment illustrated in FIGS. 1A to 1D.

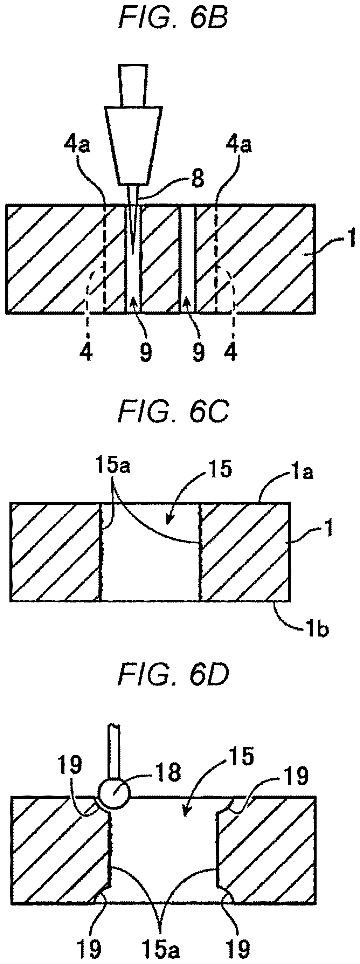

In FIG. 6A, the laser beam (first laser beam) L 1 is emitted to the glass plate 1 to form the scribe lines 4 each forming the contour line 4a of a through hole. Then, as illustrated in FIG. 6B, the laser beam 8 is emitted to a position away inward (that is, an unnecessary region) from the contour line 4a formed by the scribe line 4 to perform a fusion-cutting. As illustrated in FIG. 6B, in the glass plate 1, the fusion-cut portion 9 is formed at a position where the fusion-cutting is performed.

The glass plate 1 is divided along the scribe line 4 by the action of a tensile stress generated by the fusion-cutting, and a through hole 15 can be formed as illustrated in FIG. 6C. In this way, a glass substrate having the through hole 15 can be produced according to FIGS. 6A to 6C. In the present embodiment, the step illustrated in FIG. 6D can be further provided.

That is, in the step illustrated in FIG. 6D, a corner portion between an inner wall surface 15a of the through hole 15 and the first main surface 1a, and a corner portion between the inner wall surface 15a of the through hole 15 and the second main surface 1b are chamfered using a grindstone. In the chamfering, for example, chamfering can be performed using a ball grindstone 18. Accordingly, a chamfered surface 19 can be formed as a concave surface.

[Method for producing glass substrate according to fifth embodiment]

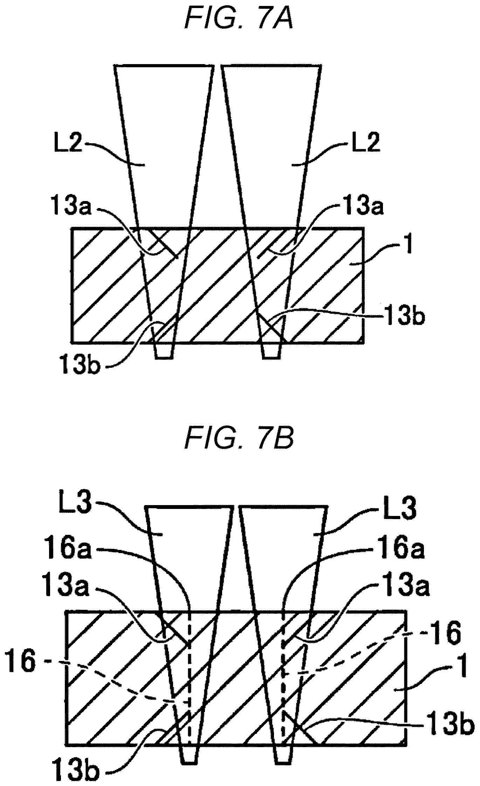

The method for producing a glass substrate of the fifth embodiment illustrated in FIGS. 7A to 7D conforms to the method for producing the glass substrate of the second embodiment illustrated in FIGS. 4A to 4D.

In FIG. 7A, the first scribe lines 13a and 13b each forming a contour line in a vicinity of an opening of the through hole are formed by the laser beam (first laser beam) L2. The first scribe lines 13a and 13b are inclined in the thickness direction toward an inner side of a through hole shape from the first main surface 1a and the second main surface 1b of the glass plate 1.

Then, in FIG. 7B, the laser beam (first laser beam) L3 is emitted to the glass plate 1 to form the second scribe line 16 that intersects with the end portions 14a and 14b of the first scribe lines 13a and 13b. The second scribe line 16 defines a contour line 16a of an inner wall surface of a through hole.

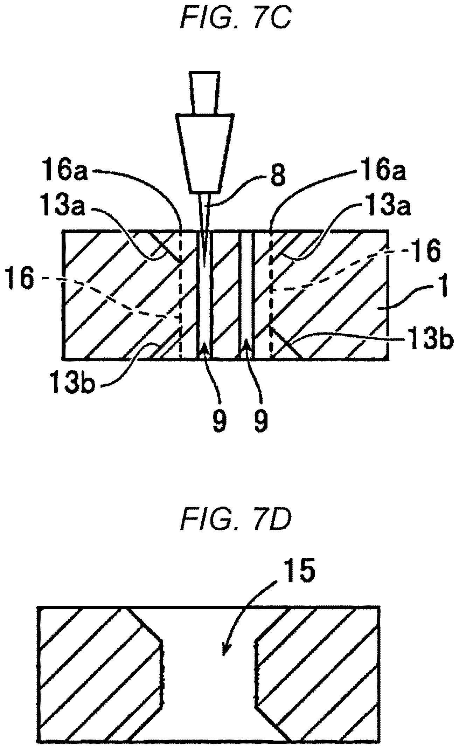

Then, in FIG. 7C, the laser beam 8 is emitted to a position away from the second scribe line 16 and the contour line 16a formed by the second scribe line 16 on an inner side of the through hole shape (that is, an unnecessary region) to perform a fusion-cutting. As illustrated in FIG. 7C, in the glass plate 1, the fusion-cut portion 9 is formed at a position where the fusion-cutting is performed.

The glass plate 1 is divided along the first scribe lines 13a and 13b and the second scribe line 16 by the action of a tensile stress generated by the fusion-cutting, and the through hole 15 can be formed as illustrated in FIG. 7D. In this way, a glass substrate having the through hole 15 can be produced according to FIGS. 6A to 6C. As illustrated in FIG. 7D, the vicinity of the opening of the through hole 15 is formed by an inclined surface.

Although not described with reference to the drawings, the through hole can be formed through the same steps as those in FIGS. 7A to 7D according to the method for producing the glass substrate of the third embodiment illustrated in FIGS. 5A to 5D. At this time, the shape of the formed through hole is the same as that of FIG. 7D or a shape similar to that of FIG. 7D.

[Method for producing glass substrate according to sixth embodiment]

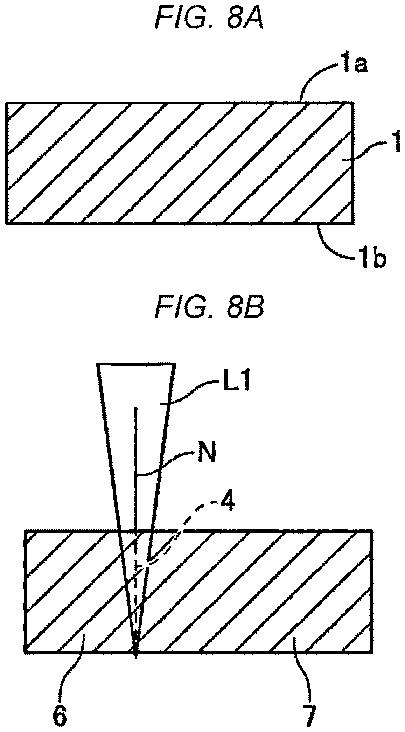

The method for producing a glass substrate of the sixth embodiment illustrated in FIGS. 8A to 8E conforms to the method for producing the glass substrate of the first embodiment illustrated in FIGS. 1A to 1D.

In FIG. 8A, the glass plate 1 is prepared, and in FIG. 8B, the laser beam L1 is emitted to the glass plate to continuously form the scribe line 4 over the entire thickness of the glass plate 1.

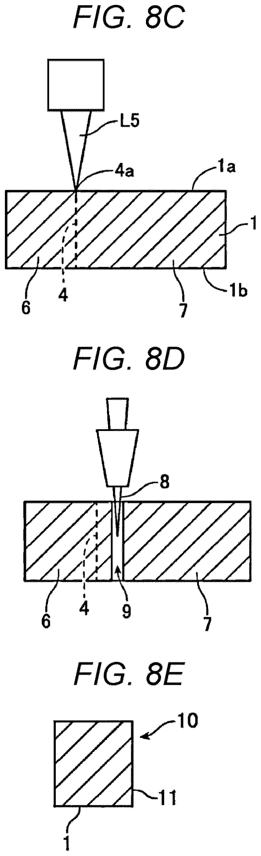

In FIG. 8C, a laser beam (second laser beam) L5 is emitted to at least a part of the scribe line 4 and the contour line 4a formed by the scribe line 4 under a condition under which the glass plate 1 is not divided. At this time, an irradiation energy of the laser beam L5 is absorbed in a vicinity of the first main surface 1a, and does not reach the entire scribe line 4 in the thickness direction. Accordingly, a thermal stress is applied to the contour line 4a on the first main surface 1a or the middle of the scribe line 4 in a depth direction from the contour line 4a. Accordingly, the spot-shaped modified portions constituting the scribe line 4 in the vicinity of the first main surface 1a or the minute cracks are connected to each other, and a compression stress is generated in this portion. In contrast, a tensile stress that is not affected by the thermal stress caused by the laser beam L5 is generated in the vicinity of the scribe line 4 away from the vicinity of the first main surface 1a.

Here, the condition under which the glass plate 1 is not divided by the laser beam L5 is a condition under which the unnecessary region 7 as described in the above embodiment is not removed, and is a laser condition under which energy obtained by irradiation with the laser beam L5 is mainly absorbed only in the vicinity of the first main surface 1a of the glass plate 1 as illustrated in FIG. 8C.

The wavelength of the laser beam L5 is adjusted to control the condition to be the condition under which the unnecessary region 7 is not removed. For example, the laser beam L5 is preferably a laser having a wavelength of 780 nm or more, and more preferably a laser having a wavelength of 5000 nm or more. The laser beam L 1 is preferably a laser having a wavelength of 20000 nm or less. For example, a semi-conductor laser, a fiber laser, a CO laser, or a $CO_2$ laser can be used.

In addition, it is preferable to use the same laser as the laser beam L5 and the laser beam (third laser beam) 8 used for a fusion-cutting performed below because the same irradiation optical system can be used as the irradiation optical systems of the laser beam L5 and the laser beam 8.

In the present embodiment, it is preferable that the laser beam L5 be a laser having a wavelength of 5000 nm or more, and have a beam diameter of 2 mm or more and 10 mm or less. The beam diameter is more preferably 3 mm or more and 8 mm or less, and more preferably 5 mm or more and 7 mm or less. It is preferable that the laser beam L5 be a laser having a wavelength of 5000 nm or more, and have a scanning speed of 10 mm/s or more and 500 mm/s or less. The scanning speed is more preferably 30 mm/s or more and 400 mm/s or less, and still more preferably 50 mm/s or more and 300 mm/s or less. It is preferable that the laser beam L5 be a laser having a wavelength of 5000 nm or more, and the energy absorbed by the glass plate be 50 mJ/mm$^2$ or more and 150 mJ/mm$^2$ or less. The energy is more

preferably 55 mJ/mm$^2$ or more and 130 mJ/mm$^2$ or less, and still more preferably 55 mJ/mm$^2$ or more and 125 mJ/mm$^2$ or less.

In the present embodiment, the breaking stress necessary for dividing (fusion-cutting) the glass plate 1 can be controlled to a low value by emitting the laser beam L5 to at least a part, in the thickness direction of the glass plate 1, of the portion where the scribe line 4 is formed, under the condition under which the unnecessary region 7 is not removed. That is, in the present embodiment, it is possible to reduce the breaking stress necessary for the fusion-cutting of the glass plate 1 performed below as compared with a case where the laser beam L5 is not emitted. Specifically, the breaking stress at the time of fusion-cutting the glass plate 1 can be 12 MPa or less. The breaking stress can be preferably 10 MPa or less, and more preferably 8 MPa or less. A breaking stress 9 at the time of fusion-cutting the glass plate 1 can be measured by a flat four-point bending test or the like. For example, Shimadzu Autograph AGS-X 10kN can be applied as a measurement device.

As illustrated in FIG. 8D, a fusion-cutting is performed with the laser beam 8 at a position away from the scribe line 4 and the contour line 4a formed by the scribe line 4 by a predetermined distance on a side opposite to a desired shape of the glass substrate, that is, the desired region 6. Accordingly, as illustrated in FIG. 8E, the unnecessary region 7 can be removed by dividing the glass plate 1 along the scribe line 4. In the present embodiment, the breaking stress necessary for the fusion-cutting of the glass plate 1 can be controlled to a low value by the irradiation with the laser beam L5 in FIG. 8C. Therefore, the unnecessary region 7 can be reliably removed by the fusion-cutting illustrated in FIG. 8D, and the glass substrate 10 having a desired shape illustrated in FIG. 8E can be obtained with a high quality and a high yield.

[Method for producing glass substrate according to seventh embodiment]

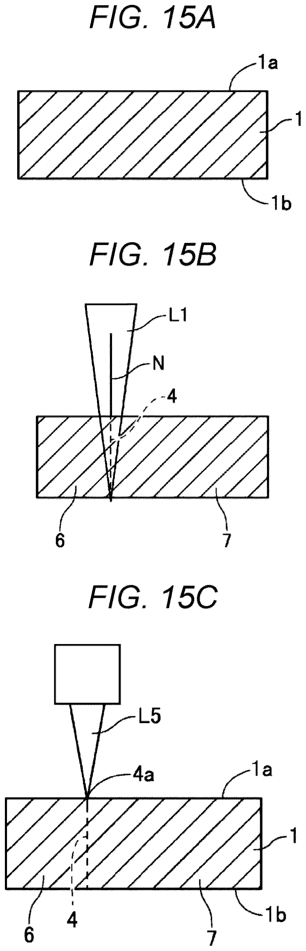

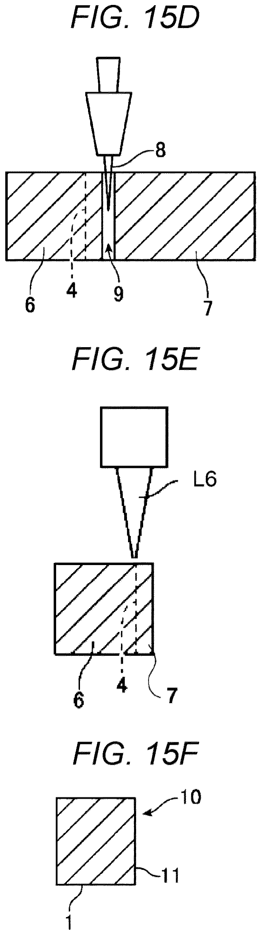

The method for producing a glass substrate of the seventh embodiment illustrated in FIGS. 15A to 15F conforms to the method for producing the glass substrate of the first embodiment illustrated in FIGS. 8A to 8E. FIGS. 15A to 15C are the same as FIGS. 8A to 8C, respectively. The differences of the seventh embodiment from the sixth embodiment will be described.

In FIG. 15D, division is performed by performing a fusion-cutting with the laser beam (third laser beam) 8 at a position away from the scribe line 4 and the contour line 4a formed by the scribe line 4 by a predetermined distance on a side opposite to a desired shape of the glass substrate, that is, the desired region 6. However, in the present embodiment, even if the fusion-cutting is performed, the unnecessary region 7 is not removed at this stage. As illustrated in FIG. 2, a tensile stress is generated toward the fusion-cut portion 9 due to the fusion-cutting, but the unnecessary region 7 remains without falling off due to friction between a scribe surface of the desired region 6 and a scribe surface of the unnecessary region 7 along the scribe line 4.

In FIG. 15E, a laser beam (fourth laser beam) L6 is further emitted, and the unnecessary region 7 completely falls off by applying the thermal stress.

It is preferable that the laser beam L6 be a laser having a wavelength of 5000 nm or more, and have a beam diameter of 0.1 mm or more and 15 mm or less. The beam diameter is more preferably 0.3 mm or more and 10 mm or less, and more preferably 0.5 mm or more and 8 mm or less. It is preferable that the laser beam L6 be a laser having a wavelength of 5000 nm or more, and have a scanning speed of 1 mm/s or more and 500 mm/s or less. The scanning speed is more preferably 5 mm/s or more and 400 mm/s or less, and still more preferably 5 mm/s or more and 300 mm/s or less. It is preferable that the laser beam L5 be a laser having a wavelength of 5000 nm or more, and the energy absorbed by the glass plate be 50 mJ/mm$^2$ or more and 20000 mJ/mm$^2$ or less. The energy is more preferably 55 mJ/mm$^2$ or more and 13000 mJ/mm$^2$ or less, and still more preferably 55 mJ/mm$^2$ or more and 12500 mJ/mm$^2$ or less.

Note that the term "division" in the first to sixth embodiments may mainly include a case where the unnecessary region 7 is removed. On the other hand, the term "division" in the present embodiment, particularly "division" in FIG. 15D indicates a state where the unnecessary region 7 and the desired region 6 are physically tentatively separated from each other along the contour line 4a. The unnecessary region 7 and the desired region 6 need not be separated at the entire circumference of the contour line 4a, the term "division" indicates a state where a part remains connected, and apparently, the unnecessary region 7 is not removed.

According to the production method of the seventh embodiment, as in the case where the contour line is a closed curve, even in the case of a shape in which the unnecessary region 7 is hardly removed due to friction generated between the desired region 6 and the scribe surface, the success rate of division can be increased, and the end surface quality and the yield of the glass substrate 10 having the desired shape can be further improved.

Further, in FIG. 15A, a cut-off line may be provided simultaneously with the contour line 4a. The cut-off line is a scribe line provided inside the unnecessary region 7 separately from the contour line 4a. A shape of the cut-off line is not particularly limited, and a starting point or an ending point of the cut-off line is preferably provided in a manner of being in contact with the contour line 4a. The falling-off of the unnecessary region 7 is promoted by providing the cut-off line, and therefore, the yield can be kept high even in the case of a shape in which the unnecessary region 7 is hardly removed, as in the case of a shape in which the contour line 4a is a closed curve and has high symmetry.

[Another method for producing glass substrate]

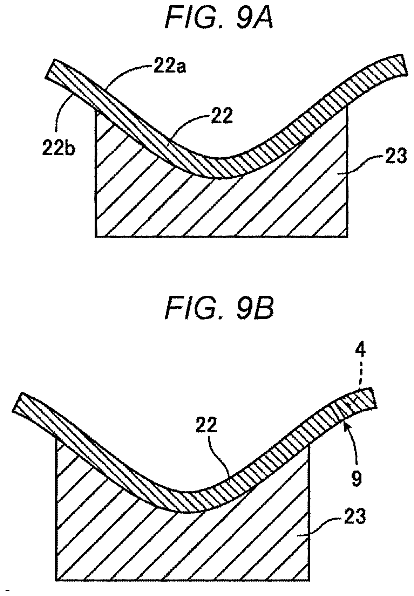

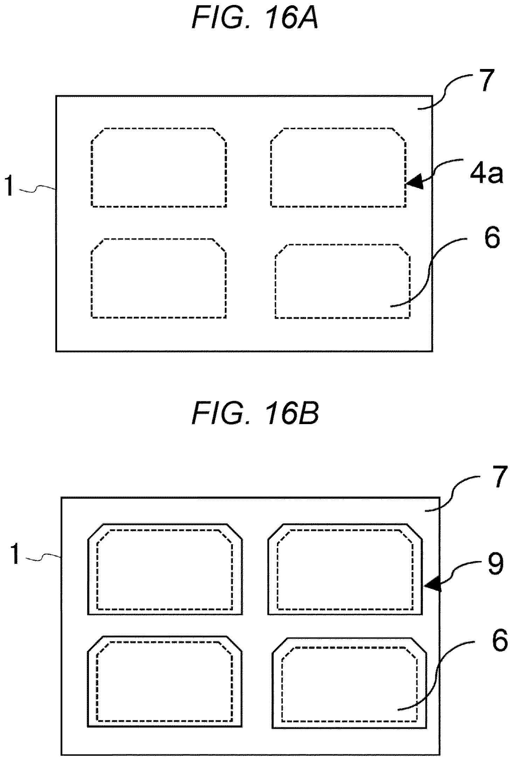

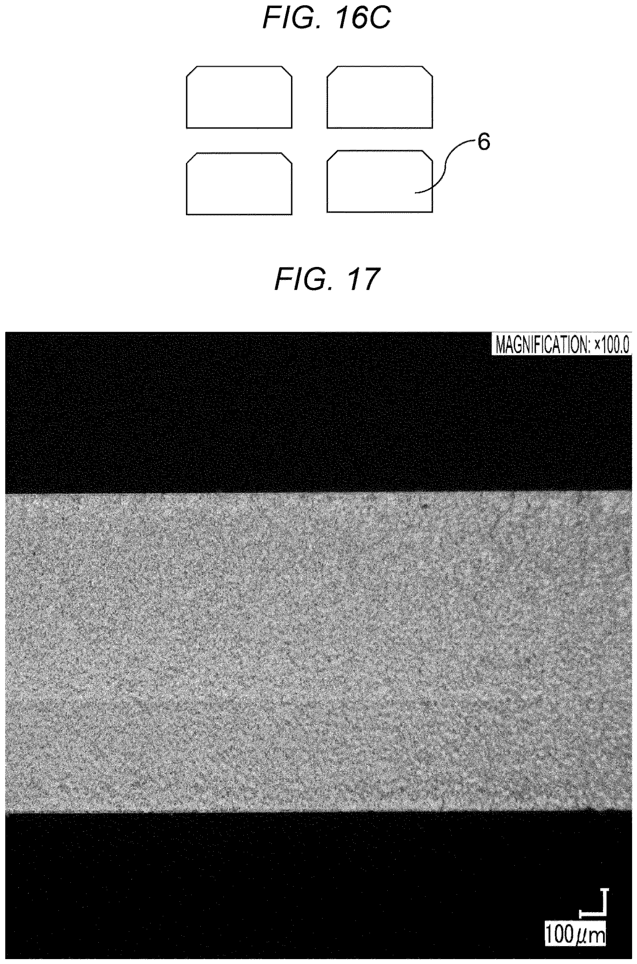

The method for producing a glass substrate in FIGS. 9A and 9B can be applied to a curved glass. As illustrated in FIG. 9A, a glass plate 22 having curved main surfaces 22a and 22b is placed on a surface of a pedestal 23. Then, in FIG. 9B, the formation of the scribe line 4 using a laser beam is performed, and the formation of the fusion-cut portion 9 using a laser beam is performed, so that a desired shape can be obtained. At this time, in the present embodiment, a desired cross-sectional shape can be obtained by laser processing without fixing the glass plate 22 to the pedestal 23. In this way, the glass plate 22 can be fusion-cut without applying a processing load, and therefore, the surface of the glass plate 22 to be divided by the laser can be formed with a desired cross-sectional shape and a high quality.
Further, according to the method for producing a glass substrate in the present embodiment, it is possible to cut the glass substrate, form a through hole in the glass substrate, and process an outer peripheral shape of the glass substrate. In the case where the contour line 4a is a closed curve, a through hole is formed in the glass substrate when the desired region 6 is located outside the contour line 4a. On the other hand, when the desired region 6 is located inside the contour line 4a, the production method in the present embodiment can be used for processing the outer peripheral shape of the glass substrate.
In the case where the production method is used for processing the outer peripheral shape of a glass substrate, a plurality of glass substrates 10 having a desired shape may be obtained from one large glass plate. For example, as illustrated in FIGS. 16A to 16C, after a plurality of contour lines 4a having a desired shape are formed on the glass plate 1, the laser beam 8 may be emitted to the plurality of contour lines 4a to remove the unnecessary region 7, thereby obtaining a plurality of glass substrates having a desired shape. In this way, the plurality of glass substrates 10 having a desired shape can be efficiently obtained by collectively performing the steps on the plurality of desired regions 6. An area of the unnecessary region 7 in the glass plate 1 can be reduced by devising the placement of the contour line 4a. The irradiation conditions of the laser beam 8 may be changed according to the positions of the glass substrates having a desired shape which are obtained from one large glass plate, or the conditions of the local stress of the glass substrate may be changed by slightly deforming the glass plate. The conditions can be optimized for the difference in rigidity between glass substrates at different positions in one large glass plate, and a glass substrate having a desired shape with a high-quality end surface can be obtained by changing the conditions in this manner.
The glass substrate produced by the method for producing a glass substrate in the present embodiment may be a laminated glass in which a plurality of glass plates are bonded to each other via an interlayer. The laminated glass can be divided to form a desired outer peripheral surface, a desired through hole, and the like.

[Glass substrate in present embodiment]

In the related art, a technique of forming a through hole in a glass substrate is known. For example, Patent Literature 2 also discloses a technique of forming a through hole. However, in the related art, an inner surface of a through hole cannot be formed with a desired cross-sectional shape and a high quality, and in particular, it is difficult to achieve both the visibility of the through hole and the in-hole strength of the through hole. Therefore, a glass substrate capable of achieving both the visibility of the through hole and the in-hole strength of the through hole can be obtained by using the above-described method for producing a glass substrate.
FIG. 10A is a plan view of a glass substrate having a through hole in the present embodiment. FIG. 10B is a cross-sectional view of the glass substrate having a through hole in the present embodiment.
A glass substrate 40 in the present embodiment has a first main surface 40a on a front surface side and a second main surface 40b on a back surface side. The first main surface 40a and the second main surface 40b face each other in the thickness direction.
As illustrated in FIGS. 10A and 10B, the glass substrate 40 has a through hole 41 penetrating in the thickness direction from the first main surface 40a to the second main surface 40b.
Each of the main surfaces 40a and 40b of the glass substrate 40 has, for example, a rectangular shape in plan view. The main surfaces 40a and 40b may have a trapezoidal shape, a circular shape, an elliptical shape, or the like in plan view, and are not particularly limited. The same applies to the glass substrate described below.
The glass substrate 40 is, for example, a soda-lime glass, an alkali-free glass, or a glass for chemical strengthening. The glass for chemical strengthening is used as, for example, a cover glass after being chemically strengthened. The glass substrate 40 may be a glass for air-tempering. The same applies to the glass substrate described below.
The through hole 41 has inclined surfaces 42 inclined in the thickness direction toward the inner side of the through hole 41 from the respective main surfaces 40a and 40b of the glass substrate 40, and inner wall surfaces 43 each connecting the inclined surfaces 42 inside the through hole 41 in the thickness direction of the glass substrate 40. In the present embodiment, the surface roughness of the inclined surface 42 is smaller than the surface roughness of the inner wall surface 43. As illustrated in FIG. 10B, the inclined surface 42 is a mirror surface as compared with the inner wall surface 43, and on the other hand, the inner wall surface 43 is a satin finished surface having a surface roughness greater than that of the inclined surface 42.

The arithmetic average roughness Ra1 of the inclined surfaces 42 is, for example, 0.1 $\mu$m or less, preferably 50 nm or less, and more preferably 10 nm or less from the viewpoint of improving the in-hole strength of the through hole 41. The arithmetic average roughness Ra1 of the inclined surfaces 42 is, for example, 1 nm or more, and preferably 2 nm or more. On the other hand, the arithmetic average roughness Ra2 of the inner wall surfaces 43 is, for example, 1 $\mu$m or more, and preferably 2 $\mu$m or more. The arithmetic average roughness Ra2 of the inner wall surfaces 43 is, for example, 3 $\mu$m or less.

The arithmetic average roughnesses Ra1 and Ra2 are measured in accordance with Japanese Industrial Standard JIS B0601: 2013. When the arithmetic average roughness Ra of the inclined surface 42 of the glass substrate 40 is within the above-described range, the in-hole strength of the through hole 41 is improved, and therefore, the glass substrate 40 is particularly suitable for use as a cover glass for an automatic vehicle interior part.

The inclined surface 42 preferably has a diffraction grating formed by Wallner lines or Arrest lines. The term "Wallner lines" refers to striped lines indicating an extending direction of a crack. The term "Arrest lines" is striped lines indicating a temporary stop of extension of a crack. Accordingly, the visibility of the through hole 41 can be improved.

The glass substrate 40 illustrated in FIGS. 10A and 10B can be obtained through the steps illustrated in FIGS. 7A to 7D or through the steps similar to those illustrated in FIGS. 7A to 7D in accordance with the method for producing the glass substrate of the third embodiment illustrated in FIGS. 5A to 5D.

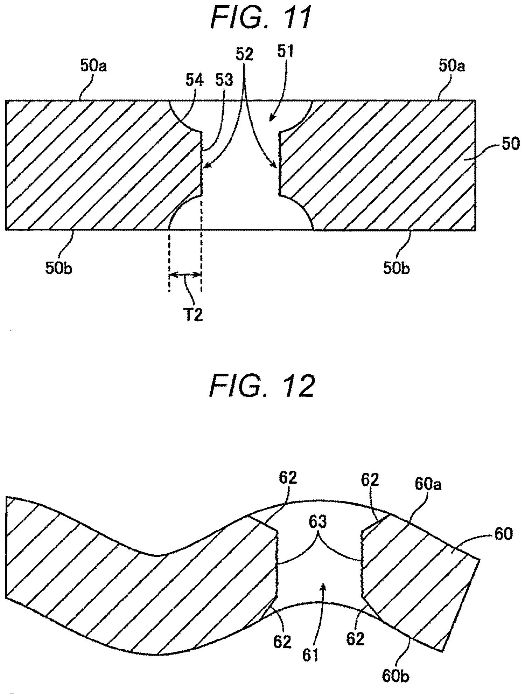

As illustrated in FIG. 10A, a contour line that appears on the first main surface 40a of the through hole 41 is circular, and may be, for example, a free curved shape having a plurality of radii of curvature, such as an elliptical shape. The same applies to a contour line that appears on the second main surface 40b of the through hole 41. The same applies to through holes 51, 61, and 73 respectively illustrated in FIGS. 11 to 13.

[Glass substrate in another embodiment different from that of FIGS. 10A and 10B]

FIG. 11 is a cross-sectional view of a glass substrate 50 in another embodiment different from that of FIGS. 10A and 10B.

As illustrated in FIG. 11, the glass substrate 50 has a first main surface 50a on a front surface side, and a second main surface 50b on a back surface side. The first main surface 50a and the second main surface 50b face each other in the thickness direction.

As illustrated in FIG. 11, the glass substrate 50 has a through hole 51 penetrating in the thickness direction from the first main surface 50a to the second main surface 50b.

As illustrated in FIG. 11, an inner peripheral surface 52 of the through hole 51 includes an inner wall surface 53 and a chamfered surface 54 located between the inner wall surface 53 and the respective main surfaces 50a and 50b. The inner wall surface 53 is a vertical surface in a direction perpendicular to the main surfaces 50a and 50b. The inner wall surface 53 is a cut surface cut along a scribe line, and the chamfered surface 54 of the present embodiment is a surface chamfered by the ball grindstone 18 illustrated in FIG. 6D.

In the present embodiment, the maximum height Sz of the surface roughness of each of the inner wall surface 53 and the chamfered surface 54 can be 10 $\mu$m or less. The maximum height Sz is a value measured in accordance with JIS B 0601: 2001. For the measurement of the maximum height Sz of the surface roughness, for example, a laser microscope (LEXT OLS5000, manufactured by Olympus Corporation) was used. In the present embodiment, the maximum height Sz of the chamfered surface 54 can be smaller than that of the inner wall surface 53. The inner wall surface 53 is a cut surface obtained by the laser beam L1, and therefore, the maximum height Sz can be 10 $\mu$m or less, preferably 8 $\mu$m or less, and more preferably 7 $\mu$m or less. For example, the maximum height Sz of the inner wall surface 53 can be about 6 $\mu$m to 8 $\mu$m. In the present embodiment, the maximum height Sz can also be 5 $\mu$m or less also in the chamfered surface 54 which is a grinding surface of the ball grindstone 8. It is preferable to reduce the maximum height Sz of the surface roughness of the chamfered surface 54, and the lower limit value can be set to about 1 $\mu$m. In this way, extremely small scratches are generated on the inner wall surface 53 and the chamfered surface 54 during the shape processing, and in the present embodiment, the maximum height Sz of the surface roughness of the chamfered surface 54 can be very small, and the in-hole strength can be increased.

In the present embodiment, the chamfered surface 54 is formed as a concave surface. Accordingly, the visibility of the through hole 51 can be improved. In the present embodiment, as described in FIG. 6D, a corner portion between each of the main surfaces 50a and 50b and the inner wall surface 53 is chamfered by the ball grindstone 18. Accordingly, the glass substrate 50 having the through hole 51 illustrated in FIG. 11 can be obtained.

In the present embodiment, a variation width of a chamfer width T2 can be reduced, and the variation width of the chamfer width T2 of at least one of the chamfered surfaces 54 of the inner peripheral surface 52 can be reduced to 20 $\mu$m or less.

<Curved glass>

FIG. 12 is a cross-sectional view of a curved glass as an example of the glass substrate in the present embodiment.

In FIGS. 10A to 11, the main surfaces 40a, 40b, 50a, and 50b of the glass substrates 40 and 50 have planar shapes, but in the present embodiment, as illustrated in FIG. 12, a glass substrate 60 may be a curved glass in which main surfaces 60a and 60b facing each other are curved. Although not limited, the main surfaces 60a and 60b may be curved surfaces that are not developable surfaces.

In the present embodiment, the planar shape refers to a shape having a radius of curvature greater than 10000 mm, and a curved shape refers to a shape having a radius of curvature of 10000 mm or less. In the curved glass, the radius of curvature is preferably 50 mm or more, more preferably 100 mm or more, and still more preferably 200 mm or more. The radius of curvature is, for example, 10000 mm or less, preferably 5000 mm or less, and more preferably 3000 mm or less.

As illustrated in FIG. 12, the glass substrate 60 has a through hole 61 penetrating between the main surfaces 60a and 60b. Similar to FIG. 10B, for example, the through hole 61 includes an inner wall surface 63, and inclined surfaces 62 connecting the inner wall surface 63 and the respective main surfaces 60a and 60b. The surface roughness of the inclined surface 62 is smaller than the surface roughness of the inner wall surface 63. Alternatively, like the inner peripheral surface of the through hole illustrated in FIG. 11, the inner peripheral surface may have an inner wall surface and a concave chamfered surface.

<Laminated glass>

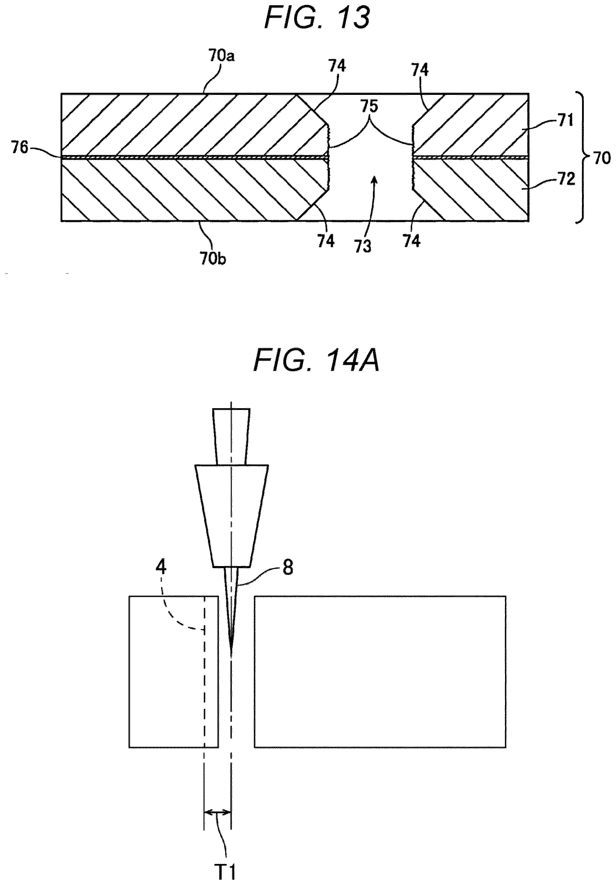

FIG. 13 is a cross-sectional view of a laminated glass as an example of the glass substrate in the present embodiment.

As illustrated in FIG. 13, a glass substrate 70 is a laminated glass in which a first glass 71 and a second glass 72 are bonded to each other via an adhesive layer such as an interlayer 76. A through hole 73 that penetrates the main surfaces 70a and 70b that appear on outside surfaces of the first glass 71 and the second glass 72 is formed. Similar to FIG. 10B, for example, the through hole 73 includes an inner wall surface 75 and inclined surfaces 74 connecting the inner wall surface 75 and the respective main surfaces 70a and 70b. The surface roughness of the inclined surface 74 is smaller than the surface roughness of the inner wall surface 75. Alternatively, like the inner peripheral surface of the through hole illustrated in FIG. 11, the inner peripheral surface may have an inner wall surface and a concave chamfered surface.

The glass substrates 40, 50, 60, and 70 of the embodiments illustrated in FIGS. 10A to 13 can be applied to, for example, an instrument panel for an automatic vehicle, a window for an automatic vehicle, a cover glass of a touch panel display such as a tablet, a notebook PC, or a smartphone, and a cover glass of a PC monitor or the like. The glass substrates 40, 50, 60, and 70 are excellent in strength, and therefore, the glass substrates 40, 50, 60, and 70 are particularly suitable for the glass used in relation to automatic vehicles, in particular, glass substrates for in-vehicle displays.

The laser beams used in the above-described embodiments are classified as follows.

First laser beam: a laser beam that includes the laser beams L1, L2, L3, and L4, forms a scribe line, and is used in all the embodiments.

Second laser beam: a laser beam that includes the laser beam L5 used in FIG. 8C in the sixth embodiment, and is emitted to a portion of a scribe line before fusion-cutting of the glass plate 1 under a condition under which an unnecessary region is not removed.

Third laser beam: a laser beam that includes the laser beam 8 and is used for a fusion-cutting of the glass plate 1. However, there is a case where the unnecessary region is removed even when the fusion-cutting is performed (the first and fourth to sixth embodiments) and a case where the unnecessary region is not removed (the seventh embodiment).

Fourth laser beam: a laser beam that includes the laser beam L6 used in FIG. 15E in the seventh embodiment and is for finally removing the unnecessary region after the fusion-cutting (FIG. 15D) under the condition under which the unnecessary region is not removed.

The feature points in the above-described embodiments will be summarized below.

According to an aspect of the present embodiment, there is provided a method for producing a glass substrate that has a desired shape and is obtained from the glass plate 1. The laser beam (first laser beam) L1 is emitted to the glass plate 1 to form the scribe line 4 over the entire thickness of the glass plate 1. The scribe line 4 defines a contour line of the glass substrate having the desired shape. Then, a fusion-cutting is performed at a position away from the scribe line 4 on a side opposite to the desired shape, and the unnecessary region 7 of the glass plate 1 is removed along the scribe line 4, thereby obtaining the glass substrate having the desired shape. Accordingly, the glass plate 1 can be divided with a desired cross-sectional shape and a high quality along the scribe line 4. In particular, in the present embodiment, it is possible to obtain a divided surface in which the adhesion of the molten material or occurrence of chipping is prevented.

According to an aspect of the present embodiment, there is provided a method for producing a glass substrate that has a desired shape and is obtained from the glass plate 1. The laser beam (first laser beam) L1 is emitted to the glass plate 1 to form the scribe line 4 over the entire thickness of the glass plate 1. The scribe line 4 defines a contour line of the glass substrate having the desired shape. Then, a fusion-cutting is performed at a position away from the scribe line 4 on a side opposite to the desired shape. Further, the laser beam (fourth laser beam) L6 is emitted to at least a part of the contour line 4a formed by the scribe line 4, and the unnecessary region 7 of the glass plate 1 is removed along the scribe line 4, thereby obtaining the glass substrate having the desired shape along the contour line. Accordingly, the glass plate 1 can be divided with a desired cross-sectional shape and a high quality along the scribe line 4. In particular, in the present embodiment, the breaking stress necessary for the fusion-cutting of the glass plate 1 to be performed below can be reduced, and the unnecessary region can be reliably removed.

In addition, in the method for producing a glass substrate according to the present embodiment, a high degree of freedom is provided for the thickness, size, and shape of the glass plate 1, and a high-quality divided surface having a desired cross-sectional shape can be formed. Post-treatment after division is not required, or the load associated with the post-treatment can be reduced.

According to the method for producing a glass substrate of the present embodiment, it is preferable to form a shape in which an angle between the scribe line 4 and each of normal lines of the main surfaces 1a and 1b is less than 90° in a cross section along the thickness direction of the glass plate 1. Accordingly, the divided surface may be a vertical surface perpendicular to the main surfaces 1a and 1b or an inclined surface, and a high-quality surface having a desired cross-sectional shape can be obtained in the present embodiment.

According to the method for producing a glass substrate of the present embodiment, the formation of the scribe lines includes the formation of the first scribe lines 13a and 13b that are inclined in the thickness direction toward an outer side or an inner side of the desired shape from the main surfaces 1a and 1b of the glass plate 1 facing each other, and the formation of the second scribe lines 16 and 17 that connect end portions of at least the first scribe lines 13a and 13b on the outer side or the inner side of the desired shape in the thickness direction of the glass plate. Then, a fusion-cutting is performed at a position away from the second scribe lines 16 and 17 on a side opposite to the desired shape, and thus the glass plate 1 is divided along the first scribe lines 13a and 13b and the second scribe lines 16 and 17, and the unnecessary region 7 is removed. Accordingly, the inclined surface can be formed at a connection position of the divided surface with the main surface. This inclined surface can be formed as a mirror surface, and the breaking strength of the glass substrate can be improved.

According to the method for producing a glass substrate of the present embodiment, it is preferable that the fusion-cutting be performed under a condition that the temperature at the scribe line 4 is equal to or lower than an annealing point. Accordingly, it is possible to prevent adhesion of a molten material to the divided surface or occurrence of a decrease in strength due to a residual stress, and it is possible to perform a high-quality cutting with a desired cross-sectional shape.

According to the method for producing a glass substrate of the present embodiment, it is preferable that the fusion-cutting be performed such that a stress equal to or greater than a breaking stress by which the glass plate is divided from the scribe line 4 is generated. Accordingly, a high-quality cutting can be performed with a desired cross-sectional shape along the scribe line 4.

According to the method for producing a glass substrate of the present embodiment, it is preferable that, in the irradiation with the laser beam (fourth laser beam), a laser be emitted such that a stress equal to or greater than a breaking stress by which the glass plate is divided from the scribe line 4 is generated. Accordingly, the breaking stress necessary for dividing the glass plate 1 can be controlled to a low value, and cutting with a desired cross-sectional shape and a higher quality can be performed.

According to the method for producing a glass substrate of the present embodiment, the shift amount between the scribe line 4 and the fusion-cut portion 9 is preferably specified to be more than 0.3 mm and 2.0 mm or less, more preferably specified to be 0.4 mm or more and 2.0 mm or less, and still more preferably specified to be 0.6 mm or more and 2.0 mm or less. Accordingly, the high-quality cutting can be performed with a desired cross-sectional shape, for example, in such a manner that the molten material does not remain on a divided surface formed along the scribe line 4 and chipping does not occur on the divided surface.

According to the method for producing a glass substrate of the present embodiment, the fusion-cutting can be performed along at least a part of the contour line formed by the scribe line 4. In the present embodiment, the cutting with a desired cross-sectional shape and a higher quality can be performed by performing the fusion-cutting along the entire contour line.

According to the method for producing a glass substrate of the present embodiment, by performing the fusion-cutting using a laser beam (third laser beam), the cutting with a desired cross-sectional shape and a higher quality can be performed, and the method is particularly suitable for a complicated shape, formation of a through hole, and the like.

According to the method for producing a glass substrate of the present embodiment, it is preferable that, before the fusion-cutting, the laser beam (the second laser beam) be emitted to at least a part, in the thickness direction of the glass plate 1, of the portion where the scribe line 4 is formed, under a condition under which the unnecessary region 7 of the glass plate 1 is not removed. Accordingly, the breaking stress necessary for dividing the glass plate 1 can be controlled to a low value, and cutting with a desired cross-sectional shape and a higher quality can be performed.

According to the method for producing a glass substrate of the present embodiment, the desired shape is a through hole, and the through hole can be formed by forming the scribe line 4 that forms a contour of the through hole and performing a fusion cutting at a position away inward from a contour line formed by the scribe line 4. In this way, not only the end surface is divided, but also hollowing is possible.

The method for producing a glass substrate of the present embodiment preferably includes chamfering an end surface using a grindstone after obtaining the desired shape. As illustrated in FIG. 6D, for example, a chamfered surface can be formed using the ball grindstone 18.

According to the method for producing a glass substrate of the present embodiment, the glass substrate may be a curved glass having a curved surface that is not a developable surface. In this way, the cutting with a desired cross-sectional shape and a high quality can be performed even in the case of the curved glass.

According to the method for producing a glass substrate of the present embodiment, the glass substrate may be a laminated glass. In this way, the cutting with a desired cross-sectional shape and a high quality can be performed even in the case of the laminated glass.

According to an aspect of the present embodiment, there is provided a glass substrate which is a glass substrate 40 having a through hole 41. An inner peripheral surface of the through hole 41 has inclined surfaces 42 inclined in a thickness direction toward an inner side of the through hole from main surfaces 40a and 40b of the glass substrate 40 facing each other, and an inner wall surface 43 connecting the inclined surfaces 42 inside the through hole 41 in the thickness direction of the glass substrate. A surface roughness of the inclined surfaces 42 is smaller than a surface roughness of the inner wall surface 43. Accordingly, the glass substrate 40 capable of achieving both the visibility of the through hole 41 and the in-hole strength can be obtained.

According to the glass substrate of the present embodiment, an arithmetic average roughness of the inclined surfaces 42 is preferably 0.1 $\mu$m or less, and an arithmetic average roughness of a wall surface is preferably 1 $\mu$m or more. Accordingly, the in-hole strength can be effectively improved.

According to the glass substrate of the present embodiment, it is preferable that the inclined surface 42 have a diffraction grating formed by Wallner lines or Arrest lines. Accordingly, the visibility of the through hole 41 can be improved.

According to an aspect of the present embodiment, there is provided a glass substrate which is a glass substrate 50 having a through hole 51. An inner peripheral surface 52 connecting main surfaces 50a and 50b of the through hole 51 facing each other has an inner wall surface 53 and chamfered surfaces 54 located between the inner wall surface 53 and each of the main surfaces 50a and 50b. Each of the chamfered surface 54 is formed as a concave surface. Accordingly, the glass substrate 50 capable of achieving both the visibility of the through hole 51 and the in-hole strength can be obtained.

According to the glass substrate of the present embodiment, a maximum height Sz of a surface roughness of each of the inner wall surface 53 and the chamfered surfaces 54 is preferably 10 $\mu$m or more or less.

According to the glass substrate of the present embodiment, a variation in a chamfer width of at least one of the chamfered surfaces on the inner peripheral surface can be 20 $\mu$m or less. In the present embodiment, the variation width of the chamfer width of all the chamfered surfaces on the inner peripheral surface is preferably 20 $\mu$m or less.

According to the glass substrate of the present embodiment, regarding a shape of a contour line of the through hole 41, a shape that appears on each of the main surfaces 40a and 40b of the glass substrate 40 can be a free curved shape having a plurality of radii of curvature. In this way, even in the case of the free curved shape, the inner peripheral surface of the through hole 41 can be formed with a desired cross-sectional shape and a high quality.

According to the glass substrate of the present embodiment, the glass substrate 60 may be a curved glass having a curved surface with a plurality of curvatures.

According to the glass substrate of the present embodiment, the glass substrate 70 may be a laminated glass.

In this way, even when the glass substrates 60 and 70 are a curved glass or a laminated glass, the glass substrates 60 and 70 capable of achieving both the visibility of the through holes 61 and 73 and the in-hole strength can be obtained.

As described above, the present specification discloses the following configurations.

(1) A method for producing a glass substrate that has a desired shape and is obtained from a glass plate, the method including:

emitting a first laser beam to the glass plate to form a scribe line over an entire thickness of the glass plate, the scribe line defining a contour line of the glass substrate having the desired shape; and

performing a fusion-cutting at a position away from the scribe line on a side opposite to the desired shape and removing an unnecessary region of the glass plate along the scribe line to obtain the glass substrate having the desired shape along the contour line.

(2) A method for producing a glass substrate that has a desired shape and is obtained from a glass plate, the method including:

emitting a first laser beam to the glass plate to form a scribe line over an entire thickness of the glass plate, the scribe line defining a contour line of the glass substrate having the desired shape;

performing a fusion-cutting at a position away from the scribe line on a side opposite to the desired shape; and

further emitting a fourth laser beam to at least a part of the contour line formed by the scribe line, and removing an unnecessary region of the glass plate along the scribe line to obtain the glass substrate having the desired shape along the contour line.

(3) The method for producing a glass substrate according to (1) or (2), in which the scribe line has a portion forming an angle of less than 90° with a normal line of the main surface in a cross section along a thickness direction of the glass plate.

(4) The method for producing a glass substrate according to any one of (1) to (3), in which a method for forming the scribe line comprises:

forming first scribe lines inclined in a thickness direction of the glass plate toward an outer side or an inner side of the desired shape from two main surfaces of the glass plate facing each other; and

forming a second scribe line connecting at least end portions of the first scribe lines on the outer side or the inner side of the desired shape in the thickness direction of the glass plate, and

a fusion-cutting is performed at a position away from the second scribe line on the side opposite to the desired shape, and an unnecessary region of the glass plate is removed along the first scribe lines and the second scribe line.

(5) The method for producing a glass substrate according to any one of (1) to (4), in which the fusion-cutting is performed under a condition that a temperature at the scribe line is equal to or lower than an annealing point.

(6) The method for producing a glass substrate according to (1), in which the fusion-cutting is performed such that a stress equal to or greater than a breaking stress by which the glass plate is divided from the scribe line is generated.

(7) The method for producing a glass substrate according to (2), in which, in the irradiation with the fourth laser beam, a laser is emitted such that a stress equal to or greater than a breaking stress by which the glass plate is divided from the scribe line is generated.

(8) The method for producing a glass substrate according to any one of (1) to (7), in which a shift amount between the scribe line and a fusion-cut portion in which the glass plate is fusion-cut is specified to be 0.3 mm or more and 2.0 mm or less.

(9) The method for producing a glass substrate according to any one of (1) to (8), in which the fusion-cutting is performed along at least a part of the scribe line.

(10) The method for producing a glass substrate according to any one of (1) to (9), in which the fusion-cutting is performed using a third laser beam.

(11) The method for producing a glass substrate according to any one of (1) to (10), in which, before the fusion-cutting, a second laser beam is emitted to at least a part, in a thickness direction of the glass plate, of a portion where the scribe line is formed, under a condition under which the unnecessary region of the glass plate is not removed.

(12) The method for producing a glass substrate according to any one of (1) to (11), in which the desired shape is a shape in which a through hole is formed, and

the through hole is formed by forming the scribe line that forms a contour of the through hole and performing a fusion-cutting at a position away inward from the contour line formed by the scribe line.

(13) The method for producing a glass substrate according to any one of (1) to (12), further including chamfering an end surface using a grindstone after obtaining the desired shape.

(14) The method for producing a glass substrate according to any one of (1) to (13), in which the glass substrate is a curved glass having a curved surface that is not a developable surface.

(15) The method for producing a glass substrate according to any one of (1) to (14), in which the glass substrate is a laminated glass.

(16) A glass substrate having a through hole, in which an inner peripheral surface of the through hole includes:

inclined surfaces inclined in a thickness direction of the glass plate toward an inner side of the through hole from two main surfaces of the glass substrate facing each other; and

an inner wall surface connecting the inclined surfaces inside the through hole in the thickness direction of the glass substrate, and

a surface roughness of the inclined surfaces is smaller than a surface roughness of the inner wall surface.

(17) The glass substrate according to (16), in which an arithmetic average roughness of the inclined surfaces is 0.1 $\mu$m or less, and an arithmetic average roughness of the inner wall surfaces is 1 $\mu$m or more.

(18) The glass substrate according to (16) or (17), in which the inclined surfaces include a diffraction grating formed by Wallner lines or Arrest lines.

(19) A glass substrate having a through hole, in which an inner peripheral surface of the through hole connects main surfaces facing each other,

the inner peripheral surface includes:

an inner wall surface; and

chamfered surfaces located between the inner wall surface and each of the main surfaces, and

each of the chamfered surface is formed as a concave surface.

(20) The glass substrate according to (19), in which a maximum height Sz of a surface roughness of each of the inner wall surface and the chamfered surfaces is 10 $\mu$m or less.

(21) The glass substrate according to (19) or (20), in which a variation in a chamfer width of at least one of the chamfered surfaces on the inner peripheral surface is 20 $\mu$m or less.

(22) The glass substrate according to any one of (16) to (21), in which a shape of a contour line of the through hole is a free curved shape that appears on each of the main surfaces of the glass substrate and has a plurality of radii of curvature.

(23) The glass substrate according to any one of (16) to (22), in which the glass substrate is a curved glass having a curved surface that is not a developable surface.

(24) The glass substrate according to any one of (16) to (23), being a laminated glass.

(25) The glass substrate according to any one of (16) to (24), being used for a cover glass of an in-vehicle display.

EXAMPLES

Hereinafter, effects of the present invention will be described with reference to Examples and Comparative Examples. The present invention is not limited to the following Examples.

(Experiment 1)

In Experiment 1, a glass substrate was produced according to the first embodiment. As illustrated in FIG. 14A, the scribe line 4 extending over the entire thickness was formed on a soda-lime glass having a thickness of 1.8 mm by irradiation with the laser beam L1. Subsequently, a fusion-cutting was performed by the laser beam 8 at a position away from the scribe line 4 in the planar direction by a predetermined shift amount T1.

The irradiation conditions of the laser beam L1 for forming the scribe line 4 were as follows.

Oscillator: Spectra-Physics Explorer One HE 355-100
Light wavelength: 355 nm
Pulse energy: 85 $\mu$J
Theoretical condensing diameter: 15.8 $\mu$m
Scanning speed in in-plane direction: 20 mm/s
Irradiation pitch in in-plane direction: 20 $\mu$m
Irradiation pitch in plate thickness direction: 100 $\mu$m

The laser fusion-cutting conditions for forming the fusion-cut portion 9 were as follows.

Oscillator: IPG photonics fiber laser oscillator

Light wavelength: 1070 nm
Output: 550 W
Theoretical condensing diameter: 120 $\mu$m
Scanning speed: 10 mm/s
Coaxial nozzle outlet diameter: 2 mm
Coaxial nozzle air pressure: 0.3 MPa
Distance between glass and coaxial nozzle tip: 3 mm

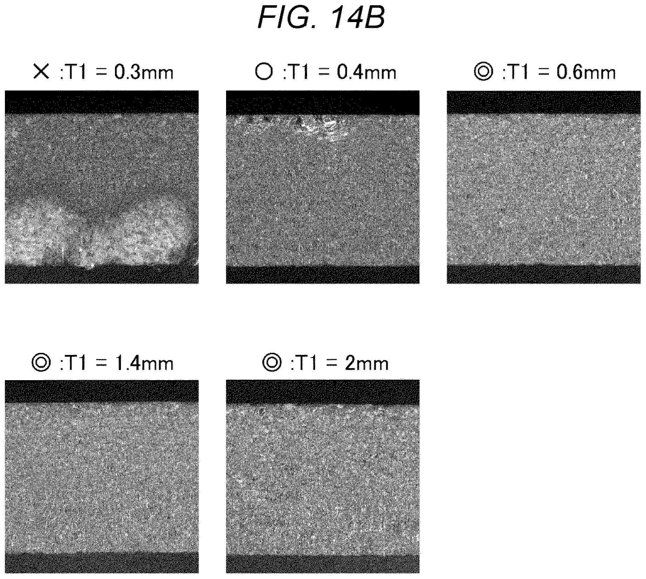

In Experiment 1, the shift amount T1 was changed from 0.3 mm to 2 mm, and states of the obtained divided surfaces were observed. The experimental results are shown in FIG. 14B.

As shown in FIG. 14B, in the case where the shift amount T1 was set to 0.3 mm, the molten material adhered to a divided glass end surface.

As shown in FIG. 14B, in the case where the shift amount T1 was set to 0.4 mm, the molten material did not adhere to the glass end surface, and the quality of the glass end surface was relatively good, but chipping occurred in a part.

On the other hand, as shown in FIG. 14B, in the case where the shift amount T1 was set to 0.6 mm to 2 mm, adhesion of the molten material or chipping did not occur, and the quality of the glass end surface was good.

From the above, it was found that the shift amount T1 was preferably 0.4 mm or more and 2.0 mm or less, and more preferably 0.6 mm or more and 2.0 mm or less.

(Experiment 2)

In Experiment 2, a glass substrate was produced according to the seventh embodiment. Hereinafter, Experiment 2 will be described with reference to the drawings of the seventh embodiment. The scribe line 4 extending over the entire thickness was formed by emitting the laser beam L1 to an aluminosilicate glass having a thickness of 1.3 mm. The scribe line 4 was formed along the contour line 4a, and the contour line 4a had a circular shape with a diameter of 50 mm. At the same time, a cutoff line was also formed inside the contour line 4a. Subsequently, the laser beam L5 was emitted along the contour line 4a formed by the scribe line 4 under the condition under which the glass plate 1 was not divided. Next, a fusion-cutting was performed by the laser beam 8 at a position away from the scribe line 4 by a predetermined shift amount T1 of 2 mm in a planar direction, and finally, the laser beam L6 was emitted to cause the unnecessary region 7 to fall off.

The irradiation conditions of the laser beam L1 for forming the scribe line 4 were as follows.

Oscillator: StarPico3 manufactured by ROFIN
Light wavelength: 1064 nm
Pulse energy: 523 $\mu$J
Optical system: SMARTCREAVE optical system manufactured by ROFIN
Scanning speed in in-plane direction: 187.5 mm/s
Irradiation pitch in in-plane direction: 5 $\mu$m

The irradiation conditions of the laser beam L5 were as follows.

Oscillator: SR15i manufactured by ROFIN
Light wavelength: 10.6 $\mu$m
Output: 179.5 W
Irradiation beam diameter: 6.58 mm
Scanning speed in in-plane direction: 300 mm/s
Energy absorbed by glass plate: 89.38 mJ/mm$^2$

The irradiation conditions of the laser beam 8 were as follows.

Oscillator: SR15i manufactured by ROFIN
Light wavelength: 10.6 $\mu$m
Output: 217 W
Irradiation beam diameter: 0.3 mm
Scanning speed: 15 mm/s
Coaxial nozzle outlet diameter: 2 mm
Coaxial nozzle air pressure: 0.5 MPa
Distance between glass and coaxial nozzle tip: 3 mm

The irradiation conditions of the laser beam L6 were as follows.

Oscillator: SR15i manufactured by ROFIN
Light wavelength: 10.6 $\mu$m
Output: 105 W
Energy absorbed by glass plate: 11510 mJ/mm$^2$
Irradiation beam diameter: 1.0 mm
Scanning speed: 8.3 mm/s
Coaxial nozzle outlet diameter: 2 mm
Coaxial nozzle air pressure: 0.05 MPa
Distance between glass and coaxial nozzle tip: 3 mm

As illustrated in FIG. 17, adhesion of the molten material or chipping did not occur on the divided surface, and the quality of the glass end surface was good.

(Experiment 3)

In Experiment 3, glass substrates were prepared under the conditions a to c according to the first, sixth, and seventh embodiments. Ten glass substrates were prepared for each of the conditions a to c, and the quality of the end surface of the divided surface of each glass substrate and the success rate at which the unnecessary region 7 naturally fell off without applying an additional external force to the unnecessary region 7 were evaluated. Hereinafter, details of each condition will be described with reference to the drawings of the embodiments.

(Condition a)

The condition a was implemented according to the first embodiment. The scribe line 4 extending over the entire thickness was formed by emitting the laser beam L1 to an aluminosilicate glass having a thickness of 1.3 mm. The scribe line 4 was formed along the contour line 4a. The contour line 4a had a shape of a rectangle of 100 mm $\times$ 50 mm, and the rectangular square was rounded with a radius of curvature R10. Subsequently, a fusion-cutting was performed by the laser beam 8 at a position away from the scribe line 4 by a predetermined shift amount T1 of 1.3 mm in the planar direction, and the unnecessary region 7 fell off.

The irradiation conditions of the laser beam L1 for forming the scribe line 4 were as follows.

Oscillator: HypreRapidNX manufactured by COHERENT
Light wavelength: 1064 nm
Pulse energy: 645 $\mu$J
Optical system: SMARTCREAVE optical system manufactured by COHERENT
Scanning speed in in-plane direction: 25 mm/s
Irradiation pitch in in-plane direction: 4 $\mu$m

The irradiation conditions of the laser beam 8 were as follows.

Oscillator: SR15i manufactured by LUXINAR
Light wavelength: 10.6 $\mu$m
Output: 217 W
Irradiation beam diameter: 0.5 mm
Scanning speed: 10 mm/s
Coaxial nozzle outlet diameter: 2 mm
Coaxial nozzle air pressure: 0.5 MPa
Distance between glass and coaxial nozzle tip: 1 mm

(Condition b)

The condition b was implemented according to the sixth embodiment.

The condition b was the same as the condition a except that, between the formation of the scribe line 4 using the irradiation with the laser beam L1 and the fusion-cutting with the laser beam 8 in the condition a, the laser beam L5 was further emitted under the condition under which the glass plate 1 was not divided, and that the condition of each laser was as follows.

The irradiation conditions of the laser beam L 1 for forming the scribe line 4 were as follows.

Oscillator: HypreRapidNX manufactured by COHERENT
Light wavelength: 1064 nm
Pulse energy: 645 $\mu$J
Optical system: SMARTCREAVE optical system manufactured by COHERENT Scanning speed in in-plane direction: 25 mm/s
Irradiation pitch in in-plane direction: 4 $\mu$m

The irradiation conditions of the laser beam L5 were as follows.

Oscillator: SR15i manufactured by LUXINAR
Light wavelength: 10.6 $\mu$m
Output: 47 W
Irradiation beam diameter: 7.00 mm
Scanning speed in in-plane direction: 30 mm/s
Energy absorbed by glass plate: 190 mJ/mm$^2$

The irradiation conditions of the laser beam 8 were as follows.

Oscillator: SR15i manufactured by LUXINAR
Light wavelength: 10.6 $\mu$m
Output: 217 W
Irradiation beam diameter: 0.5 mm
Scanning speed: 10 mm/s
Coaxial nozzle outlet diameter: 2 mm
Coaxial nozzle air pressure: 0.5 MPa
Distance between glass and coaxial nozzle tip: 1 mm

(Condition c)

The condition c was implemented according to the seventh embodiment. The condition c was the same as the condition a except that, between the formation of the scribe line 4 using the irradiation with the laser beam L1 and the fusion-cutting with the laser beam 8 in the condition a, the laser beam L5 was further emitted under the condition under which the glass plate 1 was not divided, and after the fusion-cutting with the laser beam 8, the laser beam L6 was emitted to cause the unnecessary region 7 to fall off, and that the condition of each laser was as follows.
The irradiation conditions of the laser beam L 1 for forming the scribe line 4 were as follows.

Oscillator: HypreRapidNX manufactured by COHERENT
Light wavelength: 1064 nm
Pulse energy: 645 $\mu$J
Optical system: SMARTCREAVE optical system manufactured by COHERENT
Scanning speed in in-plane direction: 25 mm/s
Irradiation pitch in in-plane direction: 4 $\mu$m

The irradiation conditions of the laser beam L5 were as follows.

Oscillator: SR15i manufactured by LUXINAR
Light wavelength: 10.6 $\mu$m
Output: 47 W
Irradiation beam diameter: 7.0 mm
Scanning speed in in-plane direction: 30 mm/s
Energy absorbed by glass plate: 190 mJ/mm$^2$

The irradiation conditions of the laser beam 8 were as follows.

Oscillator: SR15i manufactured by LUXINAR
Light wavelength: 10.6 $\mu$m

Output: 217 W
Irradiation beam diameter: 0.5 mm
Scanning speed: 10 mm/s
Coaxial nozzle outlet diameter: 2 mm
Coaxial nozzle air pressure: 0.5 MPa
Distance between glass and coaxial nozzle tip: 1 mm

The irradiation conditions of the laser beam L6 were as follows.

Oscillator: SR15i manufactured by LUXINAR
Light wavelength: 10.6 $\mu$m
Output: 47 W
Energy absorbed by glass plate: 190 mJ/mm$^2$
Irradiation beam diameter: 7.0 mm
Scanning speed: 30 mm/s
Coaxial nozzle outlet diameter: 2 mm
Coaxial nozzle air pressure: 0.05 MPa
Distance between glass and coaxial nozzle tip: 85 mm

In all the divided surfaces of the glass substrates produced under the conditions a to c, no molten materials adhered, no chipping occurred, and the quality of the glass end surface was good. In the condition a, the success rate at which the unnecessary region 7 could naturally fall off after the fusion-cutting with the laser beam 8 was 30%. In the condition b, the success rate at which the unnecessary region 7 could naturally fall off after the fusion-cutting with the laser beam 8 was 50%. In the condition c, the success rate at which the unnecessary region 7 could naturally fall off after the irradiation with the laser beam L6 was 100%.

In this way, it is understood that, in all of the conditions a to c, the end surface after the division has a high quality, and further, in the conditions b and c, the probability at which the unnecessary region 7 naturally falls off after the step is increased, leading to an improvement in the yield.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2021-193951) filed on November 30, 2021, and the contents thereof are incorporated herein by reference.

REFERENCE SIGNS LIST

1, 22: glass plate
1a, 1b, 22a, 22b, 30a, 30b, 40a, 40b, 50a, 50b, 60a, 60b, 70a, 70b: main surface
8: laser beam (third laser beam)
4: scribe line
4a: contour line
6: desired region
7: unnecessary region
9: fusion-cut portion
10: glass substrate
11, 21, 31: outer peripheral surface
12: tensile stress
13a, 13b: first scribe line
14a, 14b: end portion
15: through hole
15a, 53: inner wall surface
16, 17: second scribe line
18: ball grindstone
19: chamfered surface
20, 30, 40, 50, 60, 70: glass substrate
21a, 31a, 42, 62, 74: inclined surface
21b, 31b: end surface

23: pedestal
41, 51, 61, 73: through hole
43, 63, 75: inner wall surface
76: interlayer
52: inner peripheral surface
54: chamfered surface
71: first glass
72: second glass
D1 to D6: modified portion
L1, L2, L3, L4: laser beam (first laser beam)
L5: laser beam (second laser beam)
L6: laser beam (fourth laser beam)
N: normal line
T1: shift amount
T2: chamfer width

## Claims

1. A method for producing a glass substrate that has a desired shape and is obtained from a glass plate, the method comprising:

   emitting a first laser beam to the glass plate to form a scribe line over an entire thickness of the glass plate, the scribe line defining a contour line of the glass substrate having the desired shape; and
   performing a fusion-cutting at a position away from the scribe line on a side opposite to the desired shape and removing an unnecessary region of the glass plate along the scribe line to obtain the glass substrate having the desired shape along the contour line.

2. A method for producing a glass substrate that has a desired shape and is obtained from a glass plate, the method comprising:

   emitting a first laser beam to the glass plate to form a scribe line over an entire thickness of the glass plate, the scribe line defining a contour line of the glass substrate having the desired shape;
   performing a fusion-cutting at a position away from the scribe line on a side opposite to the desired shape; and
   further emitting a fourth laser beam to at least a part of the contour line formed by the scribe line, and removing an unnecessary region of the glass plate along the scribe line to obtain the glass substrate having the desired shape along the contour line.

3. The method for producing a glass substrate according to claim 1 or 2, wherein the scribe line has a portion forming an angle of less than 90° with a normal line of the main surface in a cross section along a thickness direction of the glass plate.

4. The method for producing a glass substrate according to claim 1 or 2, wherein a method for forming the scribe line comprises:

   forming first scribe lines inclined in a thickness direction of the glass plate toward an outer side or an inner side of the desired shape from two main surfaces of the glass plate facing each other; and
   forming a second scribe line connecting at least end portions of the first scribe lines on the outer side or the inner side of the desired shape in the thickness direction of the glass plate, and
   a fusion-cutting is performed at a position away from the second scribe line on the side opposite to the desired shape, and an unnecessary region of the glass plate is removed along the first scribe lines and the second scribe line.

5. The method for producing a glass substrate according to claim 1 or 2, wherein the fusion-cutting is performed under a condition that a temperature at the scribe line is equal to or lower than an annealing point.

6. The method for producing a glass substrate according to claim 1, wherein the fusion-cutting is performed such that a stress equal to or greater than a breaking stress by which the glass plate is divided from the scribe line is generated.

7. The method for producing a glass substrate according to claim 2, wherein, in the irradiation with the fourth laser beam, a laser is emitted such that a stress equal to or greater than a breaking stress by which the glass plate is divided from the scribe line is generated.

8. The method for producing a glass substrate according to claim 1 or 2, wherein a shift amount between the scribe line and a fusion-cut portion in which the glass plate is fusion-cut is specified to be 0.3 mm or more and 2.0 mm or less.

9. The method for producing a glass substrate according to claim 1 or 2, wherein the fusion-cutting is performed along at least a part of the scribe line.

10. The method for producing a glass substrate according to claim 1 or 2, wherein the fusion-cutting is performed using a third laser beam.

11. The method for producing a glass substrate according to claim 1 or 2, wherein, before the fusion-cutting, a second laser beam is emitted to at least a part, in a thickness direction of the glass plate, of a portion where the scribe line is formed, under a condition under which the unnecessary region of the glass plate is not removed.

12. The method for producing a glass substrate according to claim 1 or 2, wherein the desired shape is a shape in which a through hole is formed, and
the through hole is formed by forming the scribe line that forms a contour of the through hole and performing a fusion-cutting at a position away inward from the contour line formed by the scribe line.

13. The method for producing a glass substrate according to claim 1 or 2, further comprising chamfering an end surface using a grindstone after obtaining the desired shape.

14. The method for producing a glass substrate according to claim 1 or 2, wherein the glass substrate is a curved glass having a curved surface that is not a developable surface.

15. The method for producing a glass substrate according to claim 1 or 2, wherein the glass substrate is a laminated glass.

16. A glass substrate comprising a through hole, wherein an inner peripheral surface of the through hole comprises:

inclined surfaces inclined in a thickness direction of the glass plate toward an inner side of the through hole from two main surfaces of the glass substrate facing each other; and
an inner wall surface connecting the inclined surfaces inside the through hole in the thickness direction of the glass substrate, and
a surface roughness of the inclined surfaces is smaller than a surface roughness of the inner wall surface.

17. The glass substrate according to claim 16, wherein an arithmetic average roughness of the inclined surfaces is 0.1 $\mu$m or less, and an arithmetic average roughness of the inner wall surfaces is 1 $\mu$m or more.

18. The glass substrate according to claim 16 or 17, wherein the inclined surfaces comprise a diffraction grating formed by Wallner lines or Arrest lines.

19. A glass substrate comprising a through hole, wherein an inner peripheral surface of the through hole connects main surfaces facing each other,
the inner peripheral surface comprises:

an inner wall surface; and
chamfered surfaces located between the inner wall surface and each of the main surfaces, and
each of the chamfered surface is formed as a concave surface.

20. The glass substrate according to claim 19, wherein a maximum height Sz of a surface roughness of each of the inner wall surface and the chamfered surfaces is 10 $\mu$m or less.

21. The glass substrate according to claim 19 or 20, wherein a variation in a chamfer width of at least one of the chamfered surfaces on the inner peripheral surface is 20 $\mu$m or less.

**22.** The glass substrate according to claim 16 or 19, wherein a shape of a contour line of the through hole is a free curved shape that appears on each of the main surfaces of the glass substrate and has a plurality of radii of curvature.

**23.** The glass substrate according to claim 16 or 19, wherein the glass substrate is a curved glass having a curved surface that is not a developable surface.

**24.** The glass substrate according to claim 16 or 19, being a laminated glass.

**25.** The glass substrate according to claim 16 or 19, being used for a cover glass of an in-vehicle display.

## FIG. 1A

## FIG. 1B

## FIG. 1C

*FIG. 1D*

*FIG. 2*

*FIG. 3A*

*FIG. 3B*

## FIG. 3C

## FIG. 4A

## FIG. 4B

## FIG. 4C

*FIG. 4D*

*FIG. 5A*

## FIG. 5B

## FIG. 5C

## FIG. 5D

## FIG. 6A

## FIG. 6B

## FIG. 6C

## FIG. 6D

*FIG. 7A*

*FIG. 7B*

## FIG. 7C

## FIG. 7D

## FIG. 8A

## FIG. 8B

## FIG. 8C

## FIG. 8D

## FIG. 8E

## FIG. 9A

## FIG. 9B

# FIG. 10A

# FIG. 10B

## FIG. 11

## FIG. 12

## FIG. 13

## FIG. 14A

## FIG. 14B

✕ :T1 = 0.3mm　　　○ :T1 = 0.4mm　　　◎ :T1 = 0.6mm

◎ :T1 = 1.4mm　　　◎ :T1 = 2mm

## FIG. 15A

## FIG. 15B

## FIG. 15C

*FIG. 15D*

*FIG. 15E*

*FIG. 15F*

## FIG. 16A

## FIG. 16B

## FIG. 16C

## FIG. 17

MAGNIFICATION: ×100.0

100μm

<div align="center">

**INTERNATIONAL SEARCH REPORT**

</div>

| | International application No. |
|---|---|
| | **PCT/JP2022/043631** |

**A. CLASSIFICATION OF SUBJECT MATTER**

*C03B 33/09*(2006.01)i; *B23K 26/364*(2014.01)i; *B23K 26/38*(2014.01)i; *B23K 26/53*(2014.01)i; *C03B 33/07*(2006.01)i; *C03B 33/08*(2006.01)i
FI: C03B33/09; B23K26/364; B23K26/38 Z; B23K26/53; C03B33/07; C03B33/08

According to International Patent Classification (IPC) or to both national classification and IPC

**B. FIELDS SEARCHED**

Minimum documentation searched (classification system followed by classification symbols)

C03B33/09; B23K26/364; B23K26/38; B23K26/53; C03B33/07; C03B33/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2021-514924 A (CORNING INCORPORATED) 17 June 2021 (2021-06-17) paragraphs [0002], [0003], [0076], [0082], [0085]-[0087], fig. 1, 2 | 1, 3-4, 6, 8, 10, 12-13, 15 |
| A | | 2, 5, 7, 9, 11, 14, 16-25 |
| Y | JP 2018-24536 A (NIPPON ELECTRIC GLASS CO.) 15 February 2018 (2018-02-15) paragraphs [0015]-[0025], fig. 1-4 | 1, 3-4, 6, 8, 10, 12-13, 15 |
| A | | 2, 5, 7, 9, 11, 14, 16-25 |
| Y | JP 2012-526721 A (CORNING INCORPORATED) 01 November 2012 (2012-11-01) paragraphs [0010]-[0012], fig. 1, 2 | 1, 3-4, 6, 8, 10, 12, 13, 15 |
| A | | 2, 5, 7, 9, 11, 14, 16-25 |
| Y | WO 2021/100477 A1 (AGC INC.) 27 May 2021 (2021-05-27) paragraphs [0016]-[0037], fig. 2 | 3-4, 13 |
| A | | 1-2, 5-12, 14-25 |

☑ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **25 January 2023** | **07 February 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

## INTERNATIONAL SEARCH REPORT

International application No.

**PCT/JP2022/043631**

**C.** **DOCUMENTS CONSIDERED TO BE RELEVANT**

| Category* | Citation of document, with indication, where appropriate, of the relevant passages | Relevant to claim No. |
|---|---|---|
| Y | JP 2009-84089 A (OMRON LASERFRONT INC.) 23 April 2009 (2009-04-23) paragraph [0002] | 15 |
| A | | 1-14, 16-25 |
| Y | JP 2006-182644 A (NISHIYAMA STAINLESS CHEM KK) 13 July 2006 (2006-07-13) paragraphs [0003]. [0025] | 15 |
| A | | 1-14, 16-25 |

Form PCT/ISA/210 (second sheet) (January 2015)

## INTERNATIONAL SEARCH REPORT

| International application No. |
| --- |
| **PCT/JP2022/043631** |

**Box No. III    Observations where unity of invention is lacking (Continuation of item 3 of first sheet)**

This International Searching Authority found multiple inventions in this international application, as follows:

(i) The number of inventions included in the claims:

    3

(ii) The claim numbers of claims classified into each invention:

    Invention 1: Claims 1-15
    Invention 2: Claims 16-18 and 22-25
    Invention 3: Claims 19-21

(iii) Reason for the determination that the requirement of unity of invention is not satisfied

    Claims 1-25 all share the invention-defining feature of a glass sheet (glass substrate) having a prescribed shape, but this feature cannot be said to be a special technical feature in the light of the prior art. Furthermore, claims 16-18, 22-25 and 19-21 all shared the invention-defining feature of a glass substrate having a through-hole, but this feature cannot be said to be a special technical feature in the light of the prior art.

    (Invention 1) Claims 1 and 2 have the special technical feature of "a method for manufacturing a glass substrate, the method including irradiating a glass sheet with laser light, forming a scribe line defining a contour line of a glass substrate of a prescribed shape, cutting off a portion defined the scribe line, the portion being on the side away from the desired shape, to remove the unwanted portion of the glass sheet along the scribe line, and to obtaining the glass substrate of the desired shape defined by the contour line". Furthermore, claims 3-15 depend from claim 1 or 2, and have the aforementioned special technical features. Therefore, claims 1-15 are classified as invention 1.

    (Invention 2) Claims 16-18 and 22-25 cannot be said to share the same or corresponding features with claims 1 and 2 classified as Invention 1.

    Furthermore, claims 16-18 and 22-25 are not substantially identical to or similarly closely related to any of the claims classified as invention 1.

    Therefore, claims 16-18 and 22-25 cannot be classified as invention 1.

    Claim 16 has the special technical feature of "a glass substrate having a through-hole, wherein the inner circumferential surface of the through-hole has inclined surfaces that incline from two main surfaces of the glass substrate opposing each other, toward the inner side of the through-hole in the thickness direction of the glass sheet, and an inner wall surface that connects the inclined surfaces of the inner surface of the through-hole in the thickness direction of the glass substrate, and the surface roughness of the inclined surfaces is lower than the surface roughness of the inner wall surface". Furthermore, claims 17-18 and 22-25 depend from claim 16 and have the aforementioned special technical features. Therefore, claims 16-18 and 22-25 are classified as invention 2.

(Invention 3) Claims 19-21 cannot be said to share the same or corresponding special technical features with claims 1 and 2 classified as invention 1 or claim 16 classified as invention 2.

    Furthermore, claims 19-21 are not substantially identical to or similarly closely related to any of the claims classified as invention 1 or invention 2.

    Therefore, claims 19-21 cannot be classified as either invention 1 or invention 2.

Form PCT/ISA/210 (continuation of first sheet) (January 2015)

## INTERNATIONAL SEARCH REPORT

| International application No. |
|---|
| **PCT/JP2022/043631** |

**Box No. III**     **Observations where unity of invention is lacking (Continuation of item 3 of first sheet)**

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

| | | | | | International application No. |
|---|---|---|---|---|---|
| | | | | | **PCT/JP2022/043631** |

| Patent document cited in search report | | | Publication date (day/month/year) | Patent family member(s) | Publication date (day/month/year) |
|---|---|---|---|---|---|
| JP | 2021-514924 | A | 17 June 2021 | US 2019/0263709 A1 paragraphs [0002], [0003], [0091], [0097], [0100]-[0101], fig. 1, 2<br>EP 3759057 A1<br>TW 201943487 A<br>CN 111770901 A<br>KR 10-2020-0125954 A | |
| JP | 2018-24536 | A | 15 February 2018 | TW 201805250 A | |
| JP | 2012-526721 | A | 01 November 2012 | US 2012/0047957 A1 paragraphs [0013]-[0015], fig. 1, 2<br>EP 2429961 A2<br>TW 201039952 A<br>CN 102421714 A<br>KR 10-2012-0027309 A | |
| WO | 2021/100477 | A1 | 27 May 2021 | US 2022/0274211 A1 paragraphs [0046]-[0067], fig. 2<br>CN 114728832 A<br>TW 202126419 A | |
| JP | 2009-84089 | A | 23 April 2009 | (Family: none) | |
| JP | 2006-182644 | A | 13 July 2006 | US 2004/0187659 A1 paragraphs [0004], [0020]<br>US 2008/0202298 A1<br>KR 10-1119145 B1<br>CN 1532158 A<br>SG 120973 A<br>HK 1068325 A<br>KR 10-2011-0055498 A<br>TW 200418737 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021100477 A
- JP 2020500137 A
- JP 2012526721 A
- JP 2021193951 A